(19) Europäisches Patentamt / European Patent Office / Office européen des brevets

(11) **EP 2 656 538 B1**

(12) **FASCICULE DE BREVET EUROPEEN**

(45) Date de publication et mention de la délivrance du brevet:
**29.07.2015 Bulletin 2015/31**

(21) Numéro de dépôt: **11817390.5**

(22) Date de dépôt: **19.12.2011**

(51) Int Cl.:
**H04L 9/32** [(2006.01)]

(86) Numéro de dépôt international:
**PCT/FR2011/053050**

(87) Numéro de publication internationale:
**WO 2012/085425 (28.06.2012 Gazette 2012/26)**

(54) **ACCÈS ANONYME A UN SERVICE AU MOYEN DE CERTIFICATS AGRÉGÉS**

ANONYMER ZUGRIFF AUF EINEN DIENST MITTELS AGGREGIERTER ZERTIFIKATE

ANONYMOUS ACCESS TO A SERVICE BY MEANS OF AGGREGATED CERTIFICATES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2010 FR 1061146**

(43) Date de publication de la demande:
**30.10.2013 Bulletin 2013/44**

(73) Titulaire: **Orange**
**75015 Paris (FR)**

(72) Inventeurs:
• **CANARD, Sébastien**
**F-14000 Caen (FR)**
• **LESCUYER, Roch**
**F-14123 Fleury Sur Orne (FR)**

(74) Mandataire: **Cabinet Plasseraud**
**52, rue de la Victoire**
**75440 Paris Cedex 09 (FR)**

(56) Documents cités:
• **FEDERICA PACI ET AL: "VeryIDX - A Digital Identity Management System for Pervasive Computing Environments", 1 octobre 2008 (2008-10-01), SOFTWARE TECHNOLOGIES FOR EMBEDDED AND UBIQUITOUS SYSTEMS; [LECTURE NOTES IN COMPUTER SCIENCE], SPRINGER BERLIN HEIDELBERG, BERLIN, HEIDELBERG, PAGE(S) 268 - 279, XP019107200, ISBN: 978-3-540-87784-4 pages 271-274**
• **ABHILASHA BHARGAV-SPANTZEL ET AL: "Multifactor Identity Verification Using Aggregated Proof of Knowledge", IEEE TRANSACTIONS ON SYSTEMS, MAN, AND CYBERNETICS: PART C:APPLICATIONS AND REVIEWS, IEEE SERVICE CENTER, PISCATAWAY, NJ, US, vol. 40, no. 4, 1 juillet 2010 (2010-07-01), pages 372-383, XP011307487, ISSN: 1094-6977**
• **CAMENISCH J ET AL: "EFFICIENT GROUP SIGNATURE SCHEMES FOR LARGE GROUPS", ADVANCES IN CRYPTOLOGY - CRYPTO '97. SANTA BARBARA, AUG. 17 - 21, 1997; [PROCEEDINGS OF THE ANNUAL INTERNATIONAL CRYPTOLOGY CONFERENCE (CRYPTO)], BERLIN, SPRINGER, DE, vol. CONF. 17, 17 août 1997 (1997-08-17), pages 410-424, XP000767547, ISBN: 978-3-540-63384-6**
• **Stefan Brands: "A Technical Overview of Digital Credentials", , 20 février 2002 (2002-02-20), XP055004420, Extrait de l'Internet: URL:http://www.credentica.com/overview.pdf [extrait le 2011-08-09]**

**Description**

L'invention concerne le domaine des systèmes d'accréditation anonyme pour l'accès à des services, en particulier au moyen de l'attribution de certificats agrégés entre eux.

Dans un système d'accréditation courant, une organisation de confiance émet, pour certains utilisateurs, des accréditations certifiées portant sur un ou plusieurs attributs de cet utilisateur.

Une telle organisation peut être, par exemple, une mairie émettant des accréditations certifiées consistant en des cartes d'identité, lesquelles présentent un certain nombre d'attributs associés à l'utilisateur du type nom, prénom, date de naissance, adresse, etc. Cette organisation peut également être une université émettant des accréditations certifiées consistant en des cartes d'étudiant, lesquelles présentent certains attributs associés à un étudiant du type nom, prénom, numéro d'étudiant, études suivies, etc.

Lorsqu'il souhaite accéder à un service offert par un organisme tiers agissant en tant que fournisseur de services, l'utilisateur peut alors vouloir utiliser de telles accréditations certifiées de façon anonyme, c'est-à-dire en minimisant l'information qu'il fournit à ce fournisseur de service afin d'en obtenir le service désiré.

Par exemple, l'accès à certains services spécifiques peut être restreint aux habitants d'une ville. Dans un tel cas, l'utilisateur doit alors prouver qu'il habite bien la bonne ville, de façon certifiée par la mairie, mais il peut ne pas vouloir révéler les autres attributs le concernant sur sa carte d'identité, tels que son nom ou son adresse exacte.

Similairement, un étudiant peut vouloir bénéficier d'une ristourne sur un service offert par l'organisme tiers. L'étudiant doit alors prouver qu'il possède une accréditation provenant d'une université, mais peut ne pas vouloir révéler les autres attributs le concernant sur sa carte d'étudiant, tels que son nom ou les études qu'il suit.

Pour répondre à ce besoin d'anonymat, il est possible d'envisager des systèmes d'accréditation utilisant des techniques cryptographiques proches des signatures de groupe ou des signatures aveugles.

Dans le cas des signatures de groupe, l'organisation certificatrice signe, lors de la phase de création de l'accréditation, l'ensemble des attributs associés à l'utilisateur en ne produisant qu'une seule signature. Cette signature doit être telle que l'organisation certificatrice elle-même ne doit pas être capable d'utiliser cette accréditation afin de se faire passer pour l'utilisateur, ce qui est par exemple possible en utilisant des techniques liées aux schémas de signature de groupe. L'entité de confiance est l'organisation qui délivre des accréditations. Dans les exemples présentés ci-dessus, l'Entité de confiance est la mairie, ou l'université.

Une fois l'utilisateur en possession d'une telle accréditation, il peut révéler un ou plusieurs attributs qui lui sont associés, en fonction de la demande de l'organisme tiers agissant en tant que fournisseur de services auprès duquel il requiert un service, en générant, à l'instar des techniques de signature de groupe, une preuve de connaissance des attributs non révélés et une signature sur l'ensemble des attributs, révélés ou non, sans divulguer ni les attributs non révélés ni la signature de l'organisation certificatrice. L'utilisateur préserve de ce fait son anonymat vis-à-vis du monde extérieur.

Dans ce cas de figure, il est nécessaire d'utiliser un schéma de signature permettant de signer plusieurs messages/attributs en une seule signature et où le possesseur de la signature est capable de faire une preuve de connaissance de la signature et des messages signés, sans révéler ni la signature, ni l'ensemble de ces messages/attributs qu'il souhaite cacher, tout en gardant la possibilité de donner en clair le ou les attributs qui lui sont demandés par l'organisme tiers.

Un tel schéma de signature est consommateur en temps de calcul puisqu'il nécessite de cacher explicitement les attributs non révélés. La taille de la preuve dépend donc du nombre d'attributs initialement certifiés par l'entité émettrice. Par ailleurs, sa mise en oeuvre pratique nécessite l'utilisation de données cryptographiques de taille importante, comme cela est le cas dans la technologie Idemix proposée par IBM.

Dans les cas des signatures aveugles, l'idée consiste à faire signer de façon aveugle les attributs par l'organisation certificatrice. L'utilisation d'une telle signature aveugle rend le système d'accréditation plus efficace, au détriment cependant d'une traçabilité accrue de l'utilisateur. Un exemple de ce type de technique est repris dans la technologie UProve proposée par Microsoft.

La présente invention a pour objet de remédier aux inconvénients précités des solutions envisagées de l'art antérieur et de proposer une technique alternative d'accréditation anonyme, qui soit potentiellement plus efficace et moins gourmande en temps de calcul et en bande passante et qui permette une simplification des procédures lorsqu'un utilisateur doit faire appel à des accréditations provenant d'organisations différentes.

La présente invention propose à cet effet un procédé d'accès anonyme à un service comprenant :

l'attribution, par au moins une entité certificatrice, d'une pluralité de certificats à une entité utilisatrice, ces certificats étant calculés à partir d'au moins un attribut associé à l'entité utilisatrice ;
le calcul, par l'entité utilisatrice, d'un certificat agrégé à partir d'une pluralité de certificats parmi les certificats attribués à l'entité utilisatrice ;
le calcul, par l'entité utilisatrice, d'une preuve de connaissance du certificat agrégé ; et

une vérification, effectuée par une entité vérificatrice, d'au moins un de ces certificats au moyen de ladite preuve de connaissance, l'accès au service étant fourni par l'entité vérificatrice à l'entité utilisatrice en fonction du résultat de ladite vérification.

Dans un mode de réalisation, l'attribution de la pluralité de certificats à l'entité utilisatrice comprend, pour chacun des certificats attribués par une entité certificatrice, le calcul d'un certificat au moyen d'une donnée publique liée à une clé secrète de l'entité utilisatrice, d'au moins un attribut associé à l'entité utilisatrice et d'une clé secrète de l'entité certificatrice et la transmission du certificat à l'entité utilisatrice, ce qui permet de certifier que l'utilisateur présente bien l'attribut en question tout en ne révélant pas la clé secrète de l'utilisateur.

En particulier, le certificat peut être calculé dans le cadre des environnements bilinéaires munis de couplages selon la formule suivante :

$$\sigma_i = \left( C \cdot \prod_{k=1}^{l_j} H\left(g_1^{sk_{Cj}} \middle\| g_2^{sk_{Cj}} \middle\| m_k\right) \right)^{sk_{Cj}}$$

où $\sigma_i$ représente le certificat, C représente la donnée publique liée à la clé secrète de l'entité utilisatrice, $l_j$ représente le nombre d'attributs signés par l'entité certificatrice $C_j$, H représente une fonction cryptographique de hachage, $g_1$ et $g_2$ représentent deux générateurs de groupe choisis aléatoirement et de manière uniforme respectivement dans deux groupes bilinéaires d'ordre p, où p est un nombre entier premier, $sk_{Cj}$ représente la clé secrète de l'entité certificatrice, et $m_k$ représente un attribut associé à l'entité utilisatrice.

Dans un mode de réalisation avantageux où le certificat calculé par l'entité certificatrice est un certificat provisoire, la donnée publique liée à la clé secrète de l'entité utilisatrice est un engagement sur la clé secrète de l'entité utilisatrice calculé dans l'entité utilisatrice au moyen d'une variable aléatoire avant d'être transmis à l'entité certificatrice et le certificat provisoire reçu par l'entité utilisatrice est démasqué au moyen de ladite variable aléatoire afin d'obtenir le certificat attribué à l'entité utilisatrice. Ceci permet d'empêcher l'entité certificatrice de générer des certificats qu'elle pourrait utiliser à la place de l'utilisateur.

En particulier, le démasquage du certificat provisoire comprend le calcul du certificat attribué à l'entité utilisatrice en multipliant le certificat reçu de l'entité certificatrice par la variable $(g_1^{sk_{Cj}})^{-s}$, où $g_1$ représente un générateur de groupe choisi aléatoirement et de manière uniforme dans un groupe d'ordre p, où p est un nombre entier premier, $sk_{Cj}$ représente la clé secrète de l'entité certificatrice et s est une valeur aléatoirement choisie dans l'ensemble $Z_p$ des entiers modulo p.

Avantageusement, le certificat attribué à l'entité utilisatrice est vérifié par l'entité utilisatrice après le démasquage du certificat provisoire, afin de pouvoir interrompre le protocole d'attribution avant de transmettre une quelconque de preuve de connaissance si ce protocole ne s'est pas bien déroulé.

Avantageusement, la donnée publique liée à la clé secrète de l'entité utilisatrice est vérifiée au moyen d'une preuve de connaissance de cette donnée publique, et le calcul du certificat n'est effectué que si le résultat de la vérification de l'engagement est positif, ce qui évite d'effectuer inutilement le calcul du certificat si l'utilisateur n'est pas habilité à obtenir un tel certificat et permet l'envoi d'un message d'erreur si le protocole ne s'est pas bien déroulé.

L'étape d'attribution peut comprendre en particulier le calcul, par l'entité utilisatrice, de la donnée publique liée à la clé secrète de l'entité utilisatrice, le calcul d'une première partie de la preuve de connaissance à partir de cette donnée publique liée à la clé secrète et le calcul d'une deuxième partie de la preuve de connaissance à partir d'une donnée aléatoire reçue de l'entité certificatrice.

Dans un mode de réalisation particulier, le calcul de l'engagement comprend le calcul d'une première partie de ladite donnée publique liée à la clé secrète de l'entité utilisatrice et le calcul d'une deuxième partie de la donnée publique liée à la clé secrète de l'entité utilisatrice et à au moins un certificat attribué par une autre entité certificatrice.

Avantageusement, le calcul de la preuve de connaissance de la pluralité de certificats attribués à l'entité utilisatrice comprend le calcul d'un engagement sur le certificat agrégé, le calcul d'une première partie de la preuve de connaissance à partir de l'engagement sur le certificat agrégé et le calcul d'une deuxième partie de la preuve de connaissance à partir d'une donnée aléatoire reçue de l'entité vérificatrice, ce qui permet de ne pas révéler directement le certificat agrégé et donc de préserver au mieux l'anonymat.

La présente invention vise également un programme d'ordinateur comprenant des instructions pour la mise en oeuvre de l'étape de calcul d'un certificat ci-avant lorsque ce programme d'ordinateur est exécuté par une unité de calcul située dans une entité certificatrice.

La présente invention vise par ailleurs un programme d'ordinateur comprenant des instructions pour la mise en oeuvre de l'étape de génération d'une preuve de connaissance d'une pluralité de certificats attribués à une entité utilisatrice ci-avant lorsque ce programme d'ordinateur est exécuté par une unité de calcul située dans une entité utilisatrice.

La présente invention vise en outre un programme d'ordinateur comprenant des instructions pour la mise en oeuvre de l'étape de vérification au moyen d'une preuve de connaissance d'une pluralité de certificats ci-avant, lorsque ce programme d'ordinateur est exécuté par une unité de calcul située dans une entité vérificatrice.

Au titre de la protection recherchée, les programmes d'ordinateur ci-avant sont à considérer comme des produits programme d'ordinateur.

La présente invention propose par ailleurs une entité certificatrice, apte à accréditer une entité utilisatrice, comprenant une unité de calcul apte à mettre en oeuvre l'étape de calcul d'un certificat à partir d'au moins un attribut ci-avant, et une unité de communication apte à transmettre ce certificat calculé à l'entité utilisatrice.

La présente invention propose également une entité vérificatrice, apte à vérifier une entité utilisatrice, comprenant une unité de communication apte à recevoir une preuve de connaissance d'une pluralité de certificats attribués à l'entité utilisatrice et une unité de calcul apte à mettre en oeuvre l'étape de vérification ci-avant au moyen de cette preuve de connaissance, afin de démarrer la fourniture d'un service à l'entité utilisatrice en fonction du résultat de la vérification.

La présente invention propose en outre une entité utilisatrice, apte à requérir un service par l'intermédiaire d'une entité vérificatrice, au moyen d'une preuve de connaissance d'une pluralité de certificats attribués à l'entité utilisatrice par au moins une entité certificatrice, cette entité utilisatrice comprenant une unité de communication apte à recevoir une pluralité de certificats provenant d'au moins une entité certificatrice et une unité de calcul apte à mettre en oeuvre l'étape de calcul d'une preuve de connaissance ci-avant à partir de la pluralité de certificats reçus, l'unité de communication étant apte, en outre, à transmettre la preuve de connaissance à une entité vérificatrice afin de requérir un service.

La présente invention vise enfin un système d'accréditation anonyme, pour l'accès anonyme à un service, comprenant au moins une entité certificatrice telle que décrite ci-avant, une entité vérificatrice telle que décrite ci-avant et une entité utilisatrice telle que décrite ci-avant.

D'autres caractéristiques et avantages de l'invention apparaîtront à l'examen de la description détaillée ci-après, et des dessins annexés sur lesquels :

- la figure 1 illustre les étapes principales d'un procédé d'accès anonyme à un service selon la présente invention ;
- la figure 2 illustre en particulier l'étape d'attribution d'un certificat employée par le procédé d'accès anonyme à un service selon la présente invention ;
- la figure 3 illustre en particulier les étapes de calcul d'un certificat agrégé à partir des certificats attribués à l'entité utilisatrice, de calcul d'une preuve de connaissance de ces certificats et de vérification de cette preuve de connaissance employées par le procédé d'accès anonyme à un service selon la présente invention ;
- la figure 4 illustre plus particulièrement l'étape d'attribution d'un certificat employée par le procédé d'accès anonyme à un service selon un deuxième mode de réalisation de l'invention ;
- la figure 5 illustre plus particulièrement l'étape d'attribution d'un certificat employée par le procédé d'accès anonyme à un service selon un troisième mode de réalisation de l'invention ; et
- la figure 6 représente schématiquement un système d'accréditation anonyme pour l'accès anonyme à un service, dans lequel est mis en oeuvre le procédé d'accès anonyme à un service selon la présente invention.

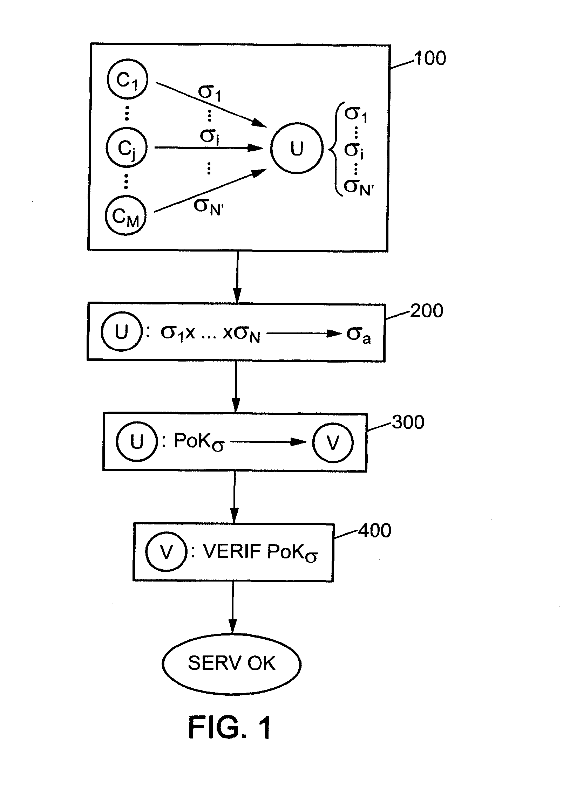

On se réfère tout d'abord à la figure 1 sur laquelle sont illustrées les étapes principales d'un procédé d'accès anonyme à un service selon la présente invention.

Ce procédé d'accès anonyme débute par l'attribution préalable (étape 100) d'une pluralité de certificats $\sigma_1,...,\sigma_i,...,\sigma_{N'}$ à une entité utilisatrice U. Ces certificats sont attribués par au moins une entité certificatrice $C_j$, voire par une pluralité d'entités certificatrices $C_1,..., C_j,...,C_M$, de sorte qu'une même entité certificatrice $C_j$ peut attribuer plusieurs certificats à l'entité utilisatrice U.

On entend ici par « entité utilisatrice » tout dispositif pouvant être utilisé par un utilisateur et disposant au moins d'une unité de communication, pour communiquer avec d'autres entités, et d'une unité de calcul permettant d'effectuer des calculs sur des données échangées avec ces autres entités, comme cela sera expliqué par la suite.

Similairement, on entend ici par « entité certificatrice » tout dispositif disposant au moins d'une unité de communication, pour pouvoir communiquer avec des entités utilisatrices, et d'une unité de calcul permettant d'effectuer des calculs sur des données échangées avec ces entités utilisatrices afin de leur attribuer un certificat, un tel certificat pouvant être agrégés avec d'autres certificats comme cela sera expliqué par la suite.

Enfin, on entend ici par « certificat » une ou plusieurs donnée(s), sous forme numérique, permettant à l'entité utilisatrice et son utilisateur de s'authentifier auprès d'un organisme tiers fournissant un service (lequel peut être distinct de l'entité certificatrice) sans lui révéler plus d'information que ce qui est nécessaire pour valider l'accès à ce service et donc en préservant leur anonymat. On peut parler ici également d'accréditation anonyme, auquel cas l'entité certificatrice peut être vue comme étant une entité d'accréditation.

Dans la présente invention, un certificat $\sigma_i$ est généré au moyen d'un ou plusieurs attribut(s) $m_1,...,m_k$ associé(s) à l'entité utilisatrice U.

De tels attributs $m_1,...,m_k$ peuvent être en particulier certains attributs de l'utilisateur utilisant cette entité utilisatrice U. Ainsi, pour reprendre l'exemple illustratif d'une entité certificatrice appartenant à une université et d'une entité utilisatrice appartenant à un étudiant, de tels attributs peuvent correspondre au nom de l'étudiant, à son prénom, son numéro d'étudiant, les différents types d'études qu'il suit dans cette université, etc. Dans l'autre exemple illustratif déjà évoqué où l'entité certificatrice appartient cette fois à une mairie émettant des cartes d'identité, ces attributs peuvent correspondre au nom de l'administré, à son prénom, sa date de naissance, son adresse, etc.

Ainsi, comme chacun des certificats $\sigma_i$ est généré à partir de tels attributs, l'utilisateur de l'entité utilisatrice peut se servir de tels certificats $\sigma_i$ pour s'authentifier auprès d'un organisme sollicitant la preuve de la certification de tels attributs par une entité certificatrice, au moyen de son entité utilisatrice U, sans révéler plus d'informations pour autant.

Une fois qu'un certain nombre de certificats $\sigma_1,...,\sigma_i,...,\sigma_{N'}$ ont été attribués à l'entité utilisatrice U, un certificat agrégé $\sigma_a$ est calculé (étape 200) par l'entité utilisatrice U à partir d'une pluralité de certificats $\sigma_1,...,\sigma_i,...,\sigma_N$ (où $N \leq N'$) parmi les certificats attribués à l'entité utilisatrice (U), par exemple en les multipliant entre eux. Cette étape 200 d'agrégation peut, par exemple, être effectuée à la volée lorsque l'utilisateur entame la procédure de requête d'un service auprès d'une entité vérificatrice V.

Ainsi, lorsque l'entité utilisatrice U désire s'authentifier auprès d'une entité vérificatrice V requérant l'authentification sur la base d'un certain nombre d'attributs de l'utilisateur, l'entité utilisatrice U peut choisir les $\sigma_i$ correspondant à ces attributs nécessaires à l'authentification parmi les N' certificats dont elle dispose.

Le procédé d'accès anonyme se poursuit par le calcul (étape 300), par l'entité utilisatrice U, d'une preuve de connaissance $PoK_\sigma$ du certificat agrégé $\sigma_a$.

On entend ici par « preuve de connaissance des certificats $\sigma_a$» des données, sous forme numérique, calculées à partir de ce certificat agrégé et permettant de prouver que l'utilisateur a la connaissance de ce certificat agrégé, donc des certificats individuels $\sigma_1,...,\sigma_i,...,\sigma_N$. qui le composent, et donc que ces certificats ont bien été attribués à l'entité utilisatrice U par une entité certificatrice, sans pour autant dévoiler ces certificats eux-mêmes.

Ici, dans la mesure où chaque certificat $\sigma_i$ a lui-même été obtenu à partir d'attributs associés à l'entité utilisatrice, la preuve de connaissance $PoK_\sigma$ ainsi générée correspond indirectement à une preuve de connaissance du fait que l'utilisateur de l'entité utilisatrice U présente bien ces attributs qui lui sont associés, ce qui permet à l'organisme tiers d'être renseigné à ce sujet sans qu'il n'ait directement accès ni à l'identité de l'utilisateur, ni aux autres attributs préalablement certifiés. Sa seule certitude est que les attributs qu'il obtient appartiennent effectivement à cette entité utilisatrice et qu'ils ont effectivement été certifiés par une entité certificatrice $C_j$.

Ce calcul de la preuve de connaissance $PoK_\sigma$, effectuée dans l'entité utilisatrice U, se termine par la transmission de cette preuve de connaissance $PoK_\sigma$ vers une entité vérificatrice V afin d'en obtenir un service.

Ainsi, on entend ici par « entité vérificatrice » tout dispositif disposant au moins d'une unité de communication pour pouvoir communiquer avec des entités utilisatrices requérant un service au moyen d'une preuve de connaissance des certificats, d'une unité de calcul pour effectuer des calculs sur des données échangées avec ces entités utilisatrices, afin de vérifier ces données avant de déclencher la fourniture du service. Le service peut alors être soit fourni directement par l'entité vérificatrice, soit fourni par une entité tiers distincte de l'entité vérificatrice auquel cas l'entité vérificatrice est apte à requérir la fourniture du service auprès de cette entité de tiers après avoir vérifié les données.

Suite à la réception de la preuve de connaissance $PoK_\sigma$ par cette entité vérificatrice V, une vérification (étape 400) est alors effectuée par cette entité vérificatrice V au moyen de cette preuve de connaissance $PoK_\sigma$ portant sur les certificats $\sigma_1,...,\sigma_i,...,\sigma_N$ attribués préalablement à l'entité utilisatrice U.

L'entité vérificatrice V fournit alors l'accès au service requis à l'entité utilisatrice U en fonction du résultat de cette vérification, c'est-à-dire seulement si cette vérification donne un résultat positif.

Dans la présente invention, les certificats $\sigma_1,...,\sigma_i,...,\sigma_N$ sont agrégeables, c'est-à-dire qu'un certificat agrégé $\sigma_a$ peut être obtenu dans l'entité utilisatrice U à partir de l'agrégation de différents certificats $\sigma_i,...,\sigma_N$ attribués par une ou plusieurs entités certificatrices $C_1,... C_j,...,C_M$, par exemple en multipliant ces certificats.

Afin d'obtenir de tels certificats agrégeables, un schéma de signature agrégeable peut être avantageusement employé par l'entité certificatrice $C_j$ pour générer un certificat agrégeable $\sigma_i$, en procédant à une signature d'un ou plusieurs attribut(s) $m_1,...,m_k$ avec une clé secrète $sk_{Cj}$ attribuée préalablement à l'entité certificatrice $C_j$, et potentiellement certifiée dans le cadre par exemple d'un système PKI classique.

L'intérêt d'utiliser des certificats $\sigma_1,...,\sigma_N$ agrégeables est de permettre d'obtenir un seul certificat agrégé $\sigma_a$, conçu à partir de plusieurs certificats agrégeables. Ce certificat agrégé $\sigma_a$ peut ensuite être vérifié par différentes entités vérificatrices au moyen d'une preuve de connaissance $PoK_\sigma$ d'un tel certificat agrégé. Dans la présente invention, une nouvelle preuve de connaissance $PoK_\sigma$ du certificat agrégé $\sigma_a$ est générée, de façon distincte, à chaque requête d'accès de l'entité utilisatrice U auprès d'une entité vérificatrice V afin d'empêcher la traçabilité de l'utilisateur.

L'invention se traduit également par un gain potentiel en bande passante et en simplicité d'utilisation dans la mesure où seule une preuve de connaissance d'un certificat agrégé est transmise aux entités vérificatrices V au lieu d'une multitude de certificats distincts et dans la mesure où l'accès à un service tiers ne nécessite pas de preuve dont la quantité de calcul dépendrait du nombre d'attributs initialement certifiés par l'entité émettrice.

En particulier, dans un petit dispositif embarqué, le fait de transmettre des données consomme plus de batterie que de faire un calcul. Pour cette raison, l'agrégation de certificats par l'entité utilisatrice U videra moins la batterie que leur transmission.

La présente invention permet en outre une simplification des procédures lorsqu'un utilisateur doit faire appel à des accréditations provenant d'organisations différentes, puisqu'un seul certificat agrégé est utilisé.

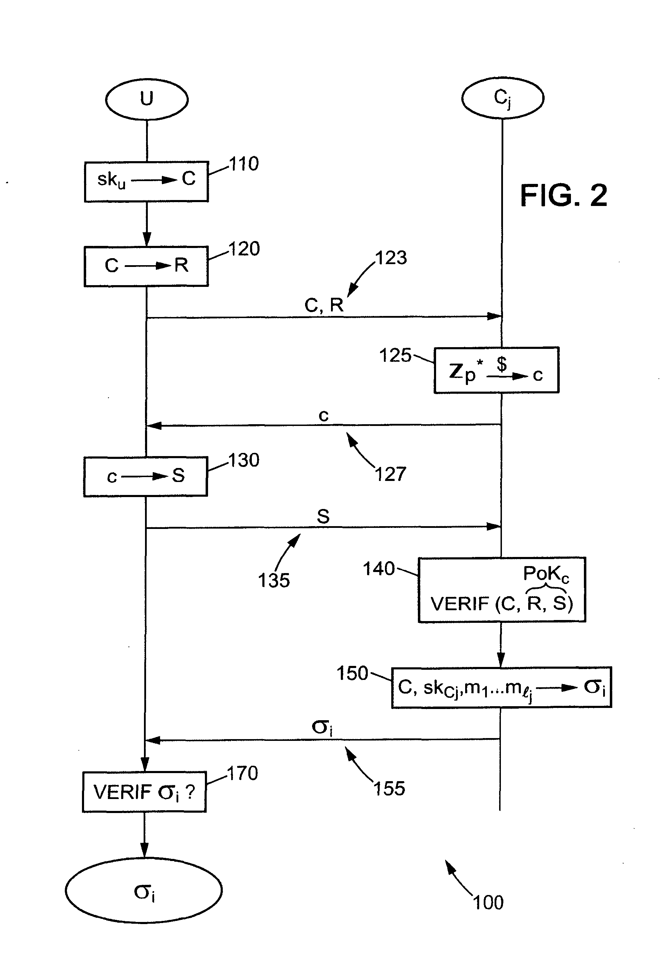

On se réfère maintenant à la figure 2 qui illustre plus particulièrement l'étape 100 d'attribution d'un certificat $\sigma_i$ telle qu'employée par le procédé d'accès anonyme à un service selon la présente invention.

Sur cette figure 2 sont représentées, à gauche, les sous-étapes effectuées par l'entité utilisatrice U et, à droite, les sous-étapes effectuées par l'entité certificatrice $C_j$, ainsi que les différentes données échangées entre ces entités au moyen de leur unité de communication respective.

L'entité utilisatrice U et l'entité certificatrice $C_j$ disposent avantageusement d'une paire de clés privée et publique respective $(sk_U, pk_U)$ et $(sk_{Ci}, pk_{Ci})$, par exemple de paires de clés asymétriques conformément à un schéma de cryptographie à clé publique. Ces clés privées et publiques peuvent être obtenues de la façon suivante :

a) une procédure d'initialisation *SETUP* est d'abord exécutée, au cours de laquelle :

- Un environnement bilinéaire $(p, G_1, G_2, e)$ est choisi où p est un nombre premier, $G_1$ et $G_2$ deux groupes d'ordre p et e un couplage bilinéaire applicable à $G_1 \times G_2$. Dans la suite, $Z_p$ désigne l'ensemble des entiers modulo p ;
- une fonction cryptographique de hachage résistante aux collisions $H : \{0,1\}^* \rightarrow G_1$ est choisie ;
- deux générateurs de groupe $g_1$ et u sont choisis aléatoirement de manière uniforme dans $G_1$ ; et
- un générateur de groupe $g_2$ est choisi aléatoirement de manière uniforme dans $G_2$.

A l'issue de cette procédure d'initialisation, les paramètres globaux $(p, G_1, G_2, e, g_1, g_2, u, H)$ sont disponibles.

b) une procédure de génération de clés *KEY.GEN* est ensuite exécutée, au cours de laquelle :

- Pour l'entité utilisatrice U :
- une variable x est choisie aléatoirement de manière uniforme dans $Z_p$, laquelle correspond à la clé privée $sk_U$ de l'entité utilisatrice U, i.e. $sk_U = x$ ;
- la variable $X = g_1^x$ est calculée, laquelle correspond à la clé publique $pk_U$ de l'entité utilisatrice U, i.e. $pk_U = X$.

- Pour chaque entité certificatrice $C_j$ impliquée :

- une variable $\gamma$ est choisie aléatoirement de manière uniforme dans $Z_p$, laquelle correspond à la clé privée $sk_{Cj}$ de l'entité certificatrice U, i.e. $sk_{Cj} = \gamma$;
- les variables $\Gamma_{j,1} = g_1^\gamma$ et $\Gamma_{j,2} = g_2^\gamma$ sont calculées, afin d'obtenir la clé publique $pk_{Cj}$ de l'entité certificatrice $C_j$, telle que $pk_{Cj} = (\Gamma_{j,1}, \Gamma_{j,2})$.

Une fois ces différents paramètres obtenus au préalable, l'étape 100 d'attribution peut débuter par le calcul (étape 110), par l'entité utilisatrice U, d'une donnée publique C liée à la clé secrète $sk_U$ de l'entité utilisatrice U, cette donnée publique C permettant de masquer la clé secrète $sk_U$ tout en autorisant des calculs impliquant cette clé secrète.

A titre d'exemple, dans un premier mode de réalisation, cette donnée publique liée à la clé secrète $sk_U$ peut être calculée selon la formule suivante :

$$(1) \qquad\qquad C = u^{sk_U}$$

Une fois la donnée publique C calculée, une première partie R d'une preuve de connaissance $PoK_C$ de cette donnée publique C peut être calculée par l'entité utilisatrice, lors d'une étape 120 de calcul d'une partie au moins de la preuve de connaissance.

Similairement à la donnée publique C, toujours dans un premier mode de réalisation, cette première partie R de la preuve de connaissance $PoK_C$ de la donnée publique C peut être calculée à partir d'une donnée $r_x$, choisie aléatoirement dans $Z_p^*$, selon la formule suivante :

$$(2) \qquad\qquad R = u^{r_x}$$

La donnée publique C et la première partie R de la preuve de connaissance PoK$_C$ de cette donnée publique C sont alors transmises, sous forme de donnée numérique, à l'entité certificatrice C$_j$ (étape 123).

Cette entité certificatrice C$_j$ renvoie en retour un nombre aléatoire c à l'entité utilisatrice U (étape 127), afin de permettre la génération d'une deuxième partie S de la preuve de connaissance PoK$_C$ au moyen de cette variable aléatoire c, ce qui est effectué lors de l'étape 130 de calcul d'une deuxième partie S de la preuve de connaissance PoK$_C$ de la donnée publique C par l'entité utilisatrice U.

Dans un premier mode de réalisation, cette deuxième partie S de la preuve de connaissance PoK$_C$ de la donnée publique C peut ainsi être calculé la formule suivante :

$$(3) \qquad\qquad S = r_x + c \cdot sk_U$$

Cette deuxième partie S de la preuve de connaissance PoK$_C$ est alors transmise vers l'entité certificatrice C$_j$ (étape 135).

Une fois en possession de la donnée publique C et de la preuve de connaissance PoK$_C$ de cette donnée publique C, l'entité certificatrice C$_j$ peut procéder alors au calcul (étape 150) d'un certificat σ$_i$ au moyen de la donnée publique C liée à la clé secrète sk$_U$ de l'entité utilisatrice U, d'un ou plusieurs attribut(s) m$_l$,..., m$_{l_j}$ associé(s) à l'entité utilisatrice U et de la clé secrète sk$_{C_j}$ de l'entité certificatrice C$_j$.

En d'autres termes, cette étape 150 de calcul correspond à la signature, par l'entité certificatrice C$_j$, d'un ou plusieurs attribut(s) m$_l$,..., m$_k$,...,m$_{l_j}$, (où l$_j$ ≥ 1 est le nombre d'attributs signés par l'entité certificatrice C$_j$) associé(s) à l'entité utilisatrice U au moyen de sa clé secrète sk$_{C_j}$ en appliquant un schéma de signature agrégeable permettant d'obtenir une signature agrégeable correspondant au certificat σ$_j$.

A titre d'exemple, dans le premier mode de réalisation introduit précédemment, le certificat σ$_i$ peut être calculé ici selon la formule suivante :

$$(4) \qquad \sigma_i = \left( C \cdot \prod_{k=1}^{l_j} H(g_1^{sk_{C_j}} \| g_2^{sk_{C_j}} \| m_k) \right)^{sk_{C_j}} = C^{sk_{C_j}} \cdot \prod_{k=1}^{l_j} \sigma_k{}'$$

$$\text{où } \sigma_k{}' = H(g_1^{sk_{C_j}} \| g_2^{sk_{C_j}} \| m_k)^{sk_{C_j}}$$

Ainsi, dans le cas particulier où un seul attribut m$_l$ est certifié par l'entité certificatrice C$_j$, c'est-à-dire où l$_j$=1, cette formule (4) devient alors la formule suivante :

$$(5) \qquad \sigma_i = \left( C \cdot H(g_1^{sk_{C_j}} \| g_2^{sk_{C_j}} \| m_1) \right)^{sk_{C_j}}$$

Il est avantageux de conditionner ce calcul au résultat d'une étape de vérification de la donnée publique C, afin d'éviter d'attribuer un certificat à un utilisateur non habilité.

Pour ce faire, une fois en possession de la donnée publique C et de la preuve de connaissance PoK$_C$ de cette donnée publique C, et avant tout calcul de certificat, l'entité certificatrice C$_j$ procède à la vérification (étape 140) de la donnée publique C liée à la clé secrète sk$_U$ de l'entité utilisatrice U, au moyen de la preuve de connaissance PoK$_C$, c'est-à-dire au moyen des première et deuxième parties R et S de la preuve de connaissance PoK$_C$.

Ainsi, dans le cas du premier mode de réalisation introduit précédemment, cette vérification peut consister à vérifier si l'égalité suivante est bien respectée :

$$(6) \qquad\qquad u^{s_x} = R \cdot C^c$$

Si le résultat de cette vérification est positif, c'est-à-dire si l'égalité (4) est bien vérifiée, l'entité certificatrice C$_j$ peut alors procéder au calcul du certificat σ$_i$ tel que décrit précédemment. Si ce résultat est négatif, une donnée d'erreur (par exemple une donnée « 0 ») peut être émise et le procédé s'arrête à ce stade.

Une fois calculé, le certificat $\sigma_i$ est ensuite transmis (étape 155) à l'entité utilisatrice U où il peut être directement utilisé pour obtenir le certificat agrégé $\sigma_a$.

Dans un mode particulier de réalisation, une ou plusieurs variable(s) auxiliaires d'information $\sigma_k$' telle(s) que $\sigma_k' = H(g_1{}^{skCj} \| g_2{}^{skCj} \| m_k)^{skCj}$ peuvent également être transmises à l'entité utilisatrice U à ce stade, et ce pour chaque attribut $m_k$ appartenant à un sous-ensemble M' d'attributs inclus dans l'ensemble de tous les attributs $\{M_k\}_{1 \leq k \leq l_j}$ signés lors de l'étape 150 de calcul. Ces variables auxiliaires d'information $\sigma_k$' peuvent être employées, lors de l'étape 300 d'authentification anonyme auprès d'une entité vérificatrice V, pour cacher certains attributs comme cela est expliqué plus loin.

Une fois reçu par l'entité utilisatrice, il peut être avantageux de vérifier (étape 170) le certificat $\sigma_i$ dans l'entité utilisatrice, avant de s'en servir pour générer une quelconque preuve de connaissance.

Cette vérification peut être effectuée au moyen de la vérification d'une relation entre le certificat $\sigma_i$, les attributs $m_l,..., m_{l_j}$ utilisés lors de la génération de ce certificat $\sigma_i$ et de la clé secrète $sk_U$ de l'entité utilisatrice U.

Pour reprendre le premier mode de réalisation évoqué précédemment, cette vérification peut consister à vérifier l'égalité suivante :

$$(7) \qquad e(\sigma_i, g_2) = e(u, \Gamma_{j,2})^{sk_U} \prod_{k=1}^{l_j} e(H(\Gamma_{j,1} \| \Gamma_{j,2} \| m_k), \Gamma_{j,2})$$

Si cette relation (7) n'est pas respectée, le résultat de la vérification 170 est négatif, ce qui se traduit par l'émission d'un message d'erreur (par exemple une donnée « 0 ») et la non-validation du certificat $\sigma_i$ dans l'entité utilisatrice U.

Si cette relation (7) est vérifiée, le résultat de cette vérification est positif : le certificat $\sigma_i$ est validé et peut être utilisé ultérieurement pour construire un certificat agrégé $\sigma_a$ permettant de requérir un service impliquant les attributs $m_1,...,m_l$ auprès d'une entité vérificatrice, en combinaison éventuellement avec d'autres attributs certifiés par d'autres entités certificatrices.

Ce certificat $\sigma_j$ peut être mémorisé à cet effet dans l'entité utilisatrice U, éventuellement conjointement avec les variables auxiliaires d'information $\sigma_k$' qui ont été avantageusement reçues de l'entité certificatrice $C_j$.

Cette étape 100 d'attribution, qui aboutit à l'attribution par une entité certificatrice $C_j$ d'un certain nombre de (au moins un) certificats $\sigma_j$, à l'entité utilisatrice U peut être répétée pour chacune des M entités certificatrices d'un ensemble d'entités certificatrices $\{C_j\}_{1 \leq j \leq M}$, ce qui aboutit à l'attribution à l'entité utilisatrice U d'un ensemble de N certificats $\{\sigma_i\}_{1 \leq i \leq N}$ délivrés par ces M entités certificatrices, et portant sur un ensemble d'attributs.

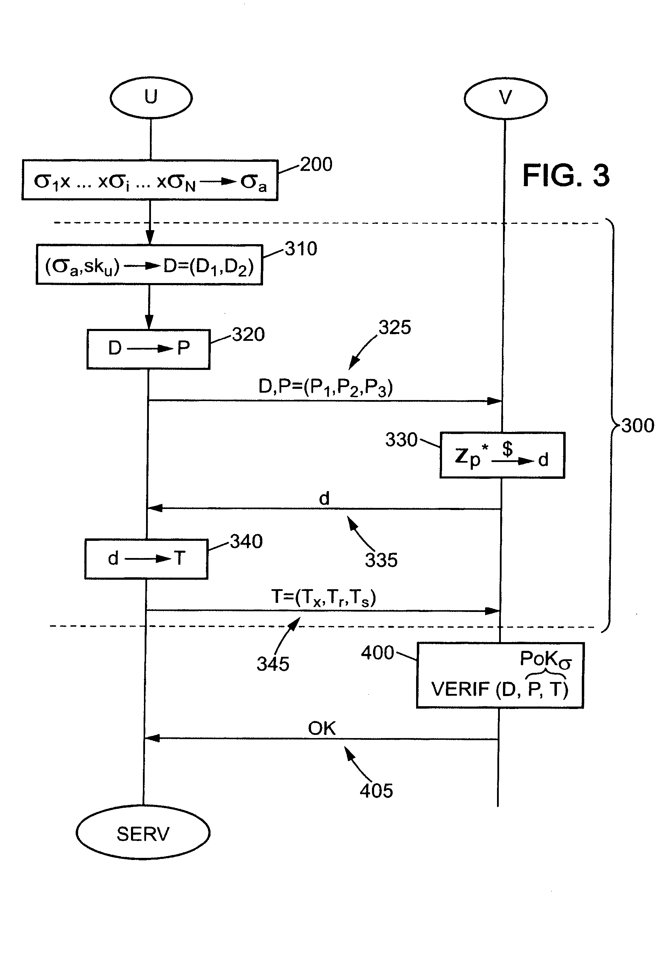

On se réfère maintenant à la **figure 3,** laquelle illustre en particulier les étapes de calcul d'un certificat agrégé à partir des certificats attribués à l'entité utilisatrice, de calcul d'une preuve de connaissance de ces certificats et de vérification de cette preuve de connaissance employées par le procédé d'accès anonyme à un service selon la présente invention.

Sur cette figure 3 sont représentées, à gauche, les sous-étapes effectuées par l'entité utilisatrice U et, à droite, les sous-étapes effectuées par l'entité vérificatrice V, ainsi que les différentes données échangées entre ces entités au moyen de leur unité de communication respectif.

On se place ici dans la situation où, lors de l'étape préalable 100 d'attribution, l'entité utilisatrice a reçu plusieurs certificats $\sigma_1,...,\sigma_i,...,\sigma_N$. attribués respectivement par M entités certificatrices $C_1,...,C_j,...,C_M$.

On procède alors au calcul (étape 200) d'un certificat agrégé $\sigma_a$ à partir d'un sous-ensemble des certificats $\sigma_1,...,\sigma_i,...,\sigma_k$ préalablement obtenus, par exemple en multipliant ces certificats de sorte que $\sigma_a = \sigma_1 * ... * \sigma_i * ... * \sigma_N$.

Cette étape 200 d'agrégation peut être effectuée à la volée par l'utilisateur, lorsque celui souhaite requérir un service par l'intermédiaire d'une entité vérificatrice V.

Une fois ce certificat agrégé $\sigma_a$ obtenu, l'entité utilisatrice U procède au calcul (étape 300) d'une preuve de connaissance $PoK_\sigma$ des certificats attribués à l'entité utilisatrice au moyen de ce certificat agrégé $\sigma_a$.

L'étape 300 de calcul de cette preuve de connaissance $PoK_\sigma$ peut se décomposer de la façon suivante :

- Un engagement D sur le certificat agrégé $\sigma_a$ est d'abord calculé (sous-étape 310) au moyen de ce certificat agrégé $\sigma_a$ et de la clé secrète $sk_U$ de l'entité utilisatrice U, par exemple selon la procédure suivante :

  a) on choisit une variable aléatoire r dans $\mathbb{Z}_p^*$ ;

  b) une première partie d'engagement $D_1$ est calculée à partir de cette variable aléatoire r, telle que $D_1 = g_1{}^r$

  c) une deuxième partie d'engagement $D_2$ est calculée à partir de la clé secrète $sk_U$ de l'entité utilisatrice U et du certificat agrégé $\sigma_a$, selon la formule $D_2 = \sigma_a^{\frac{1}{sk_U}} \cdot u^r$

L'engagement D sur le certificat agrégé $\sigma_a$ correspond alors à la paire (D1,D2).

- Une fois cet engagement D calculé par l'entité utilisatrice U, la preuve de connaissance PoK$_\sigma$ peut être calculée à partir au moins de cet engagement D, de la façon suivante :

  a) une première partie P de cette preuve de connaissance PoK$_\sigma$ peut être calculée par l'entité utilisatrice U, à partir d'une partie au moins de l'engagement D, lors d'une étape 320 de calcul, selon la procédure suivante :

  - on choisit trois variables aléatoires $r_x$, $r_r$ et $r_\delta$ dans $Z_p^*$ ;
  - on calcule les deux variables $P_1 = g_1^{r_r}$ , $P_2 = D_1^{r_x} g_1^{-r_\delta}$ $\underline{N}$
  - on calcule également $P_3 = e(D_2, g_2)^{r_x} \cdot e(u, g_2)^{-r_\delta} \cdot e(u, \prod_{j=1}^{N} \Gamma_{j,2})^{-r_r}$ ; ;

La première partie P de la preuve de connaissance PoK$_\sigma$ correspond alors au triplet (P$_1$,P$_2$,P$_3$).

  b) L'engagement D et la première partie P=(P$_1$,P$_2$,P$_3$) de la preuve de connaissance PoK$_\sigma$ sont alors transmis à l'entité vérificatrice V (étape 325), laquelle, suite à la réception de ces données, procède à la sélection d'une valeur aléatoire d dans $Z_p^*$ (étape 330) et envoie en retour cette variable aléatoire d à l'entité utilisatrice U (étape 335).

  c) Une fois cette variable d reçue, l'entité utilisatrice U procède alors au calcul d'une deuxième partie T de la preuve de connaissance PoK$_\sigma$ (étape 340) à partir de cette variable aléatoire d, par exemple selon la procédure suivante :

  - une variable $s_x$ est calculée telle que $t_x = r_x + d \cdot sk_u$ ;
  - une variable $s_r$ est calculée telle que $t_r = r_r + d \cdot r$ ; et
  - une variable $s_\delta$ est calculée telle que $t_\delta = r_\delta + d \cdot r \cdot sk_u$ .

La deuxième partie T de la preuve de connaissance PoK$_\sigma$ correspond alors au triplet de ces variables, i.e. T=(t$_x$,t$_r$,t$_\delta$).

A l'issue de cette étape 340, la deuxième partie T de la preuve de connaissance PoK$_\sigma$ est transmise (étape 345) à l'entité vérificatrice V, qui dispose alors de l'engagement D sur le certificat agrégé $\sigma_a$ , de la valeur aléatoire d et des deux parties P et T de la preuve de connaissance PoK$_\sigma$ de ce certificat agrégé $\sigma_a$.

Il est alors possible d'effectuer une vérification 400, dans l'entité vérificatrice V, de cette preuve de connaissance PoK$_\sigma$.

Une telle vérification peut être réalisée en vérifiant si les trois relations suivantes (8)-(10) sont bien respectées :

$$(8) \qquad g_1^{t_r} = P_1 \cdot D_1^d$$

$$(9) \qquad D_1^{t_x} g_1^{-t_\delta} = P_2$$

$$(10) \qquad e(D_2, g_2)^{t_x} e(h_1, g_2)^{-t_\delta} e(u, \prod_{j=1}^{N} \Gamma_{j,2})^{-t_r} = P_3 \left( \prod_{j=1}^{N} e\left( \prod_{k=1}^{l_j} H(\Gamma_{j,1} \| \Gamma_{j,2} \| m_k), \Gamma_{j,2} \right) \right)^d$$

Si l'une de ces relations (8) à (10) n'est pas respectée, le résultat de la vérification 300 est négatif, ce qui se traduit par l'émission d'un message d'erreur (par exemple une donnée « 0 ») et la non-attribution du service requis par l'entité utilisatrice U auprès de l'entité vérificatrice. Le procédé d'accès anonyme à ce service s'arrête alors à ce stade.

Par contre, si toutes les relations (8) à (10) sont respectées, le résultat de la vérification 300 est positif et le service requis par l'entité utilisatrice U auprès de l'entité vérificatrice peut être fourni à cette entité utilisatrice U, par exemple en envoyant un message d'autorisation (étape 405) à l'entité utilisatrice U, ce message pouvant comprendre des données correspondant au service requis lui-même.

Dans un mode de réalisation particulier où l'utilisateur souhaite cacher certains des attributs $m_K$, attribués par l'entité certificatrice C$_j$ et ayant un indice k appartenant à l'ensemble M$_j$' inclus dans M$_j$={1,...,l$_j$}, et pour lesquels il a reçu des variables d'information auxiliaires $\sigma_k$' telles que $\sigma_k' = H(g_1^{skCj} \| g_2^{skCj} \| m_k)^{skCj}$ lors de l'étape 155 de transmission, le certificat agrégé $\sigma_a$ peut être modifié à l'issue de l'étape 200 d'agrégation en utilisant ces variables d'information auxiliaires

$\sigma_k{}'$.

En particulier, si l'utilisateur souhaite cacher les attributs $m_k$ dont les indices k appartiennent à un sous-ensemble $M_j''$ inclus dans l'ensemble $M_j'$ ci-avant, l'opération suivante est effectuée sur le certificat agrégé après l'étape 200 d'agrégation, pour le(s) valeur(s) de k appartenant à l'ensemble $M_j''$ :

$$\sigma_a * \sigma_k{}'^{-1} \rightarrow \sigma_a$$

Cette transformation du certificat agrégé $\sigma_a$ au moyen d'une ou plusieurs variable(s) auxiliaire(s) $\sigma_k'$ calculée pour un ou plusieurs attribut(s) $m_k$ à cacher permet de cacher cet ou ces attribut(s) $m_k$ à l'entité vérificatrice V lors du processus d'authentification de l'entité utilisatrice U.

Dans ce mode particulier de réalisation, la relation (10) à vérifier devient alors la relation modifiée (10') suivante :

$$(10') \qquad e(\mathrm{D}_2, g_2)^{t_x} e(h_1, g_2)^{-t_\delta} e(u, \prod_{j=1}^{N} \Gamma_{j,2})^{-t_x} = \mathrm{P}_3 \left( \prod_{j=1}^{N} e \left( \prod_{k \in M_j / M_j''} H(\Gamma_{j,1} \| \Gamma_{j,2} \| m_k), \Gamma_{j,2} \right) \right)^d$$

En d'autres termes, cette relation modifiée (10') revient à vérifier une accréditation agrégée sur le sous-ensemble $M_j / Mj''$ valide sous les clefs publiques $\Gamma_j$ des entités certificatrices.

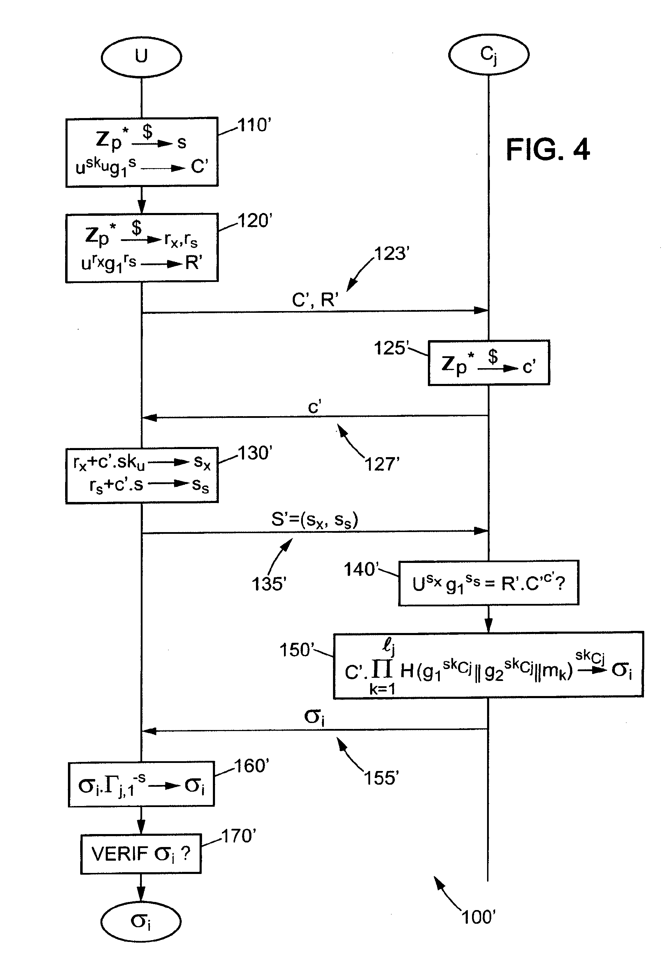

On se réfère maintenant à la **figure 4,** laquelle illustre en particulier l'étape d'attribution 100' d'un certificat employée par le procédé d'accès anonyme à un service selon un deuxième mode de réalisation de l'invention.

En effet, il est avantageux de masquer la donnée publique liée à la clé secrète $sk_U$ de l'entité utilisatrice U et la première partie de preuve de connaissance de cette donnée publique générée lors de l'étape d'attribution, afin de mieux protéger l'utilisateur en empêchant l'entité certificatrice $C_j$ de générer des certificats qu'elle pourrait délivrer à la place de l'utilisateur.

Pour ce faire, dans ce deuxième mode de réalisation, la donnée publique correspond à un engagement sur la clé secrète $sk_U$. Le terme d'« engagement » sur une valeur est entendu ici dans son sens cryptographique et correspond à une donnée (sous forme numérique), non-modifiable et liée à cette valeur, qui permet de garder cette valeur cachée dans un premier temps mais peut être employée ultérieurement pour révéler cette valeur. Un tel engagement permet de masquer la clé secrète $sk_U$, tout en garantissant son intraçabilité.

Ainsi, dans le deuxième mode de réalisation illustré sur cette figure 4, l'étape 100' d'attribution peut débuter par le calcul (étape 110'), par l'entité utilisatrice U, d'un engagement C' sur la clé secrète $sk_U$ de l'entité utilisatrice U.

Ce calcul consiste à choisir une variable aléatoire s dans $\mathbb{Z}_p^*$ et à calculer l'engagement C' selon la formule modifiée (11) suivante, laquelle remplace alors la formule (1) évoquée précédemment en relation avec l'étape 110 du premier mode de réalisation :

$$(11) \qquad \mathrm{C'} = \mathrm{u}^{sk_U} \mathrm{g_1}^s$$

Une fois cet engagement C' calculé, la première partie R' de la preuve de connaissance $PoK_C$ de cet engagement peut être calculée par l'entité utilisatrice, lors d'une étape 120' de calcul, en choisissant deux variables aléatoires $r_x$ et $r_s$ dans $\mathbb{Z}_p^*$ et en calculant la valeur R' selon la formule modifiée (12) suivante, laquelle remplace alors la formule (2) évoquée précédemment en relation avec l'étape 120 du premier mode de réalisation :

$$(12) \qquad \mathrm{R'} = \mathrm{u}^{r_x} \mathrm{g_1}^{r_s}$$

L'engagement C' et la première partie R' de la preuve de connaissance $PoK_{C'}$ de cet engagement C' sont alors transmises à l'entité certificatrice $C_j$ (étape 123').

Suite à la réception de ces données, l'entité certificatrice $C_j$ procède à la sélection d'une variable aléatoire c' dans $\mathbb{Z}_p^*$ (étape 125') et envoie en retour cette variable aléatoire c' à l'entité utilisatrice U (étape 127').

Une fois cette variable c' reçue, l'entité utilisatrice U procède alors au calcul d'une deuxième partie S' de la preuve de connaissance $PorK_{C'}$ de l'engagement C' (étape 130'), cette deuxième partie S' correspondant à la paire de

variables ($s_x$, $s_s$) calculées selon les formules modifiées (13) et (14) suivantes, lesquelles remplacent ainsi la formule (3) évoquée précédemment en relation avec l'étape 130 du premier mode de réalisation :, selon la procédure suivante :

$$(13) \qquad s_x = r_x + c' \cdot sk_u$$

$$(14) \qquad s_s = r_s + c' \cdot s .$$

La deuxième partie S' de la preuve de connaissance $PoK_{C'}$ telle que S'=($s_x$, $s_s$) est alors transmise vers l'entité certificatrice $C_j$ (étape 135').

Une fois en possession de l'engagement C', de la première partie R' de la preuve de connaissance $PoK_{C'}$ et de la deuxième partie S'=($s_x$, $s_s$) de cette preuve de connaissance $PoK_{C'}$, l'entité certificatrice $C_i$ peut procéder à la vérification (étape 140') de l'engagement C' en vérifiant si la relation modifiée (15) suivante, correspondant à la relation (6) évoquée en relation avec l'étape 140 du premier mode de réalisation, est bien respectée :

$$(15) \qquad u^{s_x} g_1^{s_s} = R' \cdot C'^{c'}$$

Si cette relation modifiée (5') n'est pas respectée, le résultat de la vérification 140' est négatif, ce qui se traduit par l'émission d'un message d'erreur et la non-attribution d'un certificat à l'entité utilisatrice U. L'étape 100' d'attribution du certificat s'arrête alors à ce stade.

Si, par contre, la relation modifiée (15) est respectée, le résultat de la vérification 140' est positif et l'étape 100' d'attribution peut se poursuivre par le calcul (étape 150') d'un certificat $\sigma_i$ selon la formule (16) suivante, laquelle correspond à la formule (4) employée lors de l'étape 150 de calcul du premier mode de réalisation :

$$(16) \qquad \sigma_i = \left( C' \cdot \prod_{k=1}^{l} H(g_1^{sk_{Cj}} \| g_2^{sk_{Cj}} \| m_k) \right)^{sk_{Cj}}$$

Le certificat $\sigma_i$ ainsi obtenu correspond au certificat obtenu par la formule (5) dans le premier mode de réalisation multiplié par la variable $g_1^{s \cdot sk_{Cj}}$ et est donc masqué par une telle variable. Ce certificat $\sigma_i$ n'est alors pas agrégeable en tant que tel et ne peut donc pas être utilisé directement par l'entité utilisatrice U lors de l'étape 200 d'agrégation. A ce titre, ce certificat $\sigma_i$ est un certificat provisoire qui est alors transmis (étape 155') par l'entité certificatrice $C_j$ à l'entité utilisatrice U.

Afin de rendre son caractère agrégeable à ce certificat provisoire $\sigma_i$ reçu de l'entité certificatrice $C_j$, ce certificat provisoire $\sigma_i$ est ensuite démasqué (étape 160') par l'entité utilisatrice U, selon la formule (17) suivante :

$$(17) \qquad \sigma_i \cdot \Gamma_{j,1}^{-s} = \sigma_i \cdot \left( g_1^{sk_{Cj}} \right)^{-s} \rightarrow \sigma_i$$

Cette opération de démasquage permet d'obtenir un certificat définitif $\sigma_i$ respectant la relation de la formule (4) (i.e. où $\sigma_i = \left( C \cdot \prod_{k=1}^{l} H(g_1^{sk_{Cj}} \| g_2^{sk_{Cj}} \| m_k) \right)^{sk_{Cj}}$) et donc agrégeable avec d'autres certificats agrégeables.

Ce certificat définitif $\sigma_i$ est ensuite avantageusement vérifié (étape 170') au moyen de la relation (7) évoquée en relation avec l'étape 170 du premier mode de réalisation.

Comme pour le premier mode de réalisation, cette étape 100' d'attribution selon un deuxième mode de réalisation, qui aboutit à l'attribution par une entité certificatrice $C_j$ d'un certificat provisoire démasqué en un certificat définitif $\sigma_i$ par l'entité utilisatrice U, peut être répétée pour chacune des M entités certificatrices $C_j$ d'un ensemble d'entités certificatrices $\{C_j\}_{1 \leq j \leq M}$, ce qui aboutit à l'attribution à l'entité utilisatrice U d'un ensemble de N certificats $\{\sigma_i\}_{1 \leq i \leq N}$, délivrés respectivement par chacune des M entités certificatrices $C_1,...,C_j,...,C_M$.

Dans ce deuxième mode de réalisation de l'étape d'attribution, la quantité de données fournies par l'utilisateur de l'entité utilisatrice U à l'entité vérificatrice V, sous forme d'attributs associés à cet utilisateur, est minimisé.

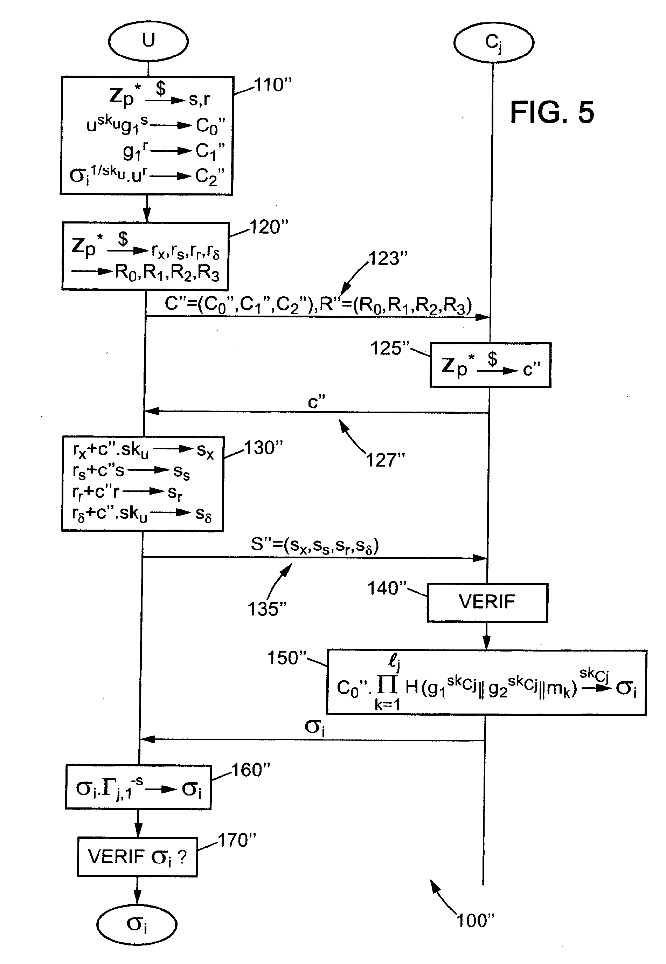

On se réfère maintenant à la figure 5, laquelle illustre également l'étape 100" d'attribution d'un certificat, telle qu'employée par le procédé d'accès anonyme à un service, selon un troisième mode de réalisation de l'invention.

Ce troisième mode de réalisation s'applique au cas où l'entité utilisatrice U possède déjà N certificats $\sigma_1$,..., $\sigma_N$, obtenus auprès de différentes entités certificatrices $C_1$,...,$C_j$,...,$C_M$ et sollicite l'attribution d'un nouveau certificat $\sigma_{N+1}$ auprès d'une nouvelle entité certificatrice $C_{j+1}$, tout en cherchant à minimiser les données fournies à cette nouvelle entité certificatrice $C_{j+1}$.

Pour illustrer ce troisième mode de réalisation, on se place dans la situation où l'entité utilisatrice a calculé un certificat agrégé $\sigma_a$ à partir des N certificats $\sigma_1$,..., $\sigma_N$, déjà attribués, c'est-à-dire dans le cas où : $\sigma_a = \prod_{i=1}^{N} \sigma_i$

Dans ce troisième mode de réalisation tel qu'illustré sur cette figure 5, l'étape 100" d'attribution débute également par le calcul (étape 110"), par l'entité utilisatrice U, d'une donnée publique C" liée à la clé secrète $sk_U$ de l'entité utilisatrice U.

Cette donnée publique C" comprend une première partie de donnée publique $C_0$" liée à la clé secrète $sk_U$, par exemple calculée selon la procédure suivante dans laquelle cette première partie de donnée publique correspond à un engagement sur cette clé secrète $sk_U$, similairement à ce qui a été précédemment décrit pour l'étape 110' :

a) on choisit une variable aléatoire s dans $\mathbb{Z}_p^*$ ;

b) on calcule $C_0" = u^{sk_u} g_1^s$

Outre cette première partie de donnée publique $C_0$", une deuxième partie de donnée publique $C_1$" est calculée selon la procédure suivante :

a) on choisit une variable aléatoire r dans $\mathbb{Z}_p^*$ ;

b) on calcule $C_1" = g_1^r$

Enfin, une troisième partie de donnée publique $C_2$" liée à la clé secrète $sk_U$ et au certificat agrégé $\sigma_a$ est calculée à partir de la clé secrète $sk_U$ de l'entité utilisatrice U et du certificat agrégé $\sigma_a$, par exemple selon la formule (18) suivante où cette troisième partie de donnée publique $C_2$" correspond à un engagement sur la clé secrète $sk_U$ de l'entité utilisatrice U et le certificat agrégé $\sigma_a$:

$$(18) \qquad C_2'' = \sigma_a^{\frac{1}{sk_U}} \cdot u^r$$

Ainsi la donnée publique C" correspond au triplet de données publiques $(C_0",C_1",C_2")$ et porte aussi bien sur la clé secrète $sk_U$ de l'entité utilisatrice U que sur le certificat agrégé $\sigma_a$ possédé par l'entité utilisatrice U.

Une fois cette donnée publique C" calculée, la première partie R" de la preuve de connaissance $PoK_{C"}$ de cette donnée publique C" peut être calculée par l'entité utilisatrice U, lors d'une étape 120" de calcul, selon la procédure suivante :

a) on choisit quatre variables aléatoires $r_x$, $r_s$, $r_r$ et $r_\delta$ dans $\mathbb{Z}_p^*$ ;

b) on calcule $R_0 = u^{r_x}g_1^{r_s}$, $R_1 = g_1^{r_r}$, $R_2 = (C_1")^{r_x}g_1^{-r_\delta}$

c) on calcule $R_3 = e(C_2'', g_2)^{r_x} \cdot e(u, g_2)^{-r_\delta} \cdot e(u, \prod_{j=1}^{N} \Gamma_{j,2})^{-r_x}$ ;

La donnée publique $C"=(C_0",C_1",C_2")$ et la première partie $R'=(R_0,R_1,R_2,R_3)$ de la preuve de connaissance $PoK_{C"}$ de cette donnée publique C" sont alors transmises à l'entité certificatrice $C_{N+1}$ (étape 123"), laquelle, suite à la réception de ces données, procède à la sélection d'une variable aléatoire c" dans $\mathbb{Z}_p$ (étape 125") et renvoie en retour cette variable aléatoire c" à l'entité utilisatrice U (étape 127").

Une fois cette variable c" reçue, l'entité utilisatrice U procède alors au calcul d'une deuxième partie S" de la preuve de connaissance $PoK_{C"}$ de cette donnée publique C" (étape 130") selon la procédure suivante :

a) une variable $s_x$ est calculée telle que $s_x = r_x + c" \cdot sk_u$ ;

b) une variable $s_s$ est calculée telle que $s_s = r_s + c" \cdot s$ ;

c) une variable $s_r$ est calculée telle que $s_r = r_r + c" \cdot r$ ; et

d) une variable $s_\delta$ est calculée telle que $s_\delta = r_\delta + c''\cdot r\cdot sk_u$ .

La deuxième partie S" de la preuve de connaissance $PoK_{C''}$ correspond alors au quadruplet de variables $(s_x, s_s, s_r, s_\delta)$, qui est alors transmis vers l'entité certificatrice $C_j$ (étape 135").

Une fois en possession de la donnée publique C", de la première partie R" de la preuve de connaissance $PoK_{C''}$ et de la deuxième partie S" de cette preuve de connaissance $PoK_{C''}$, l'entité certificatrice $C_{j+1}$ procède alors avantageusement à la vérification (étape 140") de la donnée publique C", en vérifiant si les quatre relations suivantes (19)-(22) sont bien respectées :

$$(19) \qquad u^{s_x} g_1^{s_s} = R_0 \cdot (C_0'')^{c''}$$

$$(20) \qquad g_1^{s_r} = R_1 \cdot (C_1'')^{c''}$$

$$(21) \qquad (C_1'')^{s_x} g_1^{-s_\delta} = R_2$$

$$(22) \qquad e(C_2'', g_2)^{s_x} e(h_1, g_2)^{-s_\delta} e(u, \prod_{j=1}^N \Gamma_{j,2})^{-s_x} = R_3 \left( \prod_{j=1}^N e\left( \prod_{i=1}^{l_j} H(\Gamma_{j,1} \| \Gamma_{j,2} \| m_{j,i}), \Gamma_{j,2} \right) \right)^{c''}$$

Si l'une de ces relations (19) à (22) n'est pas respectée, le résultat de la vérification 140" est négatif, ce qui se traduit par l'émission d'un message d'erreur (par exemple une donnée « 0 ») et la non-attribution d'un certificat $\sigma_{N+1}$ à l'entité utilisatrice U. L'étape 100" d'attribution du certificat s'arrête alors à ce stade.

Par contre, si toutes les relations (19) à (22) sont respectées, le résultat de la vérification 140" est positif et l'étape 100" d'attribution peut se poursuivre par le calcul (étape 150") du certificat $\sigma_{N+1}$ selon la formule (23) suivante :

$$(23) \qquad \sigma_{N+1} = \left( C_0'' \cdot \prod_{k=1}^l H(g_1^{sk_{Cj}} \| g_2^{sk_{Cj}} \| m_k) \right)^{sk_{Cj}}$$

Ce certificat $\sigma_{N+1}$, lequel est un certificat provisoire au sens où il n'est pas agrégeable en tant que tel, est alors transmis (étape 155") par l'entité certificatrice $C_{j+1}$ à l'entité utilisatrice U, où il peut être ensuite transformé en un certificat démasqué (i.e. agrégeable) $\sigma_{N+1}$ par l'entité utilisatrice U (étape 160"), selon la formule (24) suivante :

$$(24) \qquad \sigma_{N+1} \cdot \Gamma_{j+1,1}^{-s} = \sigma_{N+1} \cdot \left( g_1^{sk_{c_{j+1}}} \right)^{-s} \to \sigma_{N+1}$$

Ce nouveau certificat $\sigma_{N+1}$ est ensuite avantageusement vérifié (étape 170") au moyen de la relation (25) suivante :

$$(25) \qquad e(\sigma_{N+1}, g_2) = e(u, \Gamma_{j+1,2})^{sk_u} \prod_{k=1}^l e(H(\Gamma_{j+1,1} \| \Gamma_{j+1,2} \| m_l), \Gamma_{j+1,2})$$

Si cette relation (25) n'est pas respectée, le résultat de la vérification 170" est négatif, ce qui se traduit par l'émission d'un message d'erreur (par exemple une donnée « 0 ») et la non-validation du certificat $\sigma_{N+1}$, dans l'entité utilisatrice U.

Par contre, si la relation (25) est respectée, le résultat de la vérification 170" est positif et le certificat $\sigma_{N+1}$ est validé. Il peut alors être mémorisé par l'entité utilisatrice U afin d'être utilisé ultérieurement pour requérir anonymement un service impliquant un des attributs $m_1,...,m_1$ auprès d'une entité vérificatrice V.

On notera ici qu'à la différence des certificats $\sigma_i$ individuellement attribués dans les premier et deuxième modes de réalisation de l'étape d'attribution du procédé, le certificat $\sigma_{N+1}$ obtenu dans le troisième mode est un certificat obtenu sur présentation d'un certain nombre de certificats précédemment attribués. Il est ainsi possible de reproduire cette étape 100" d'attribution avec une nouvelle entité certificatrice $C_{N+2}$, ce qui aboutira à l'attribution d'un nouveau certificat $\sigma_{N+2}$, et ainsi de suite, de façon itérative.

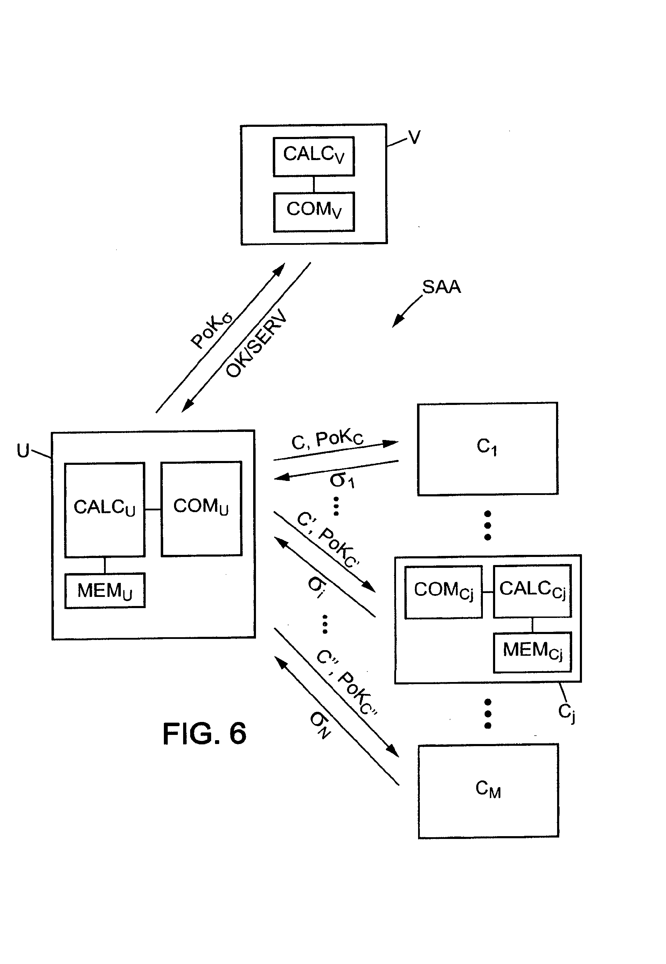

On se réfère enfin à la figure 6 qui représente schématiquement un système d'accréditation anonyme SAA pour l'accès anonyme à un service, dans lequel est mis en oeuvre le procédé d'accès anonyme à un service décrit précédemment.

Ce système d'accréditation anonyme SAA comprend:

- une entité utilisatrice U, utilisée par un utilisateur pour requérir anonymement un service auprès d'une entité vérificatrice grâce à au moins un ou plusieurs certificat(s) anonyme(s) $\sigma_j$ attribué(s) par au moins une entité certificatrice $C_j$;
- au moins une entité certificatrice $C_j$, apte à accréditer anonymement une entité utilisatrice U, en lui attribuant un ou plusieurs certificat(s) anonyme(s) $\sigma_j$ ; et
- au moins une entité vérificatrice V, apte à vérifier anonymement l'entité utilisatrice U et à lui fournir un service SERV après vérification d'une preuve de connaissance $PoK_{\sigma}$ portant sur un ou plusieurs certificat(s) anonyme(s).

Sur la figure 6 sont illustrées M entités certificatrices distinctes $C_1,...,C_j,...,C_M$, ce nombre M pouvant être n'importe quel nombre entier supérieur ou égal à 1. Seule l'entité certificatrice $C_j$ est décrite en détail, les autres entités certificatrices étant similaires à cette entité $C_j$.

Cette entité certificatrice $C_j$ peut être un dispositif informatique de type serveur appartenant à une organisation certificatrice telle qu'une mairie, une université, une préfecture, etc.

Cette entité certificatrice $C_j$ comprend en particulier une unité de calcul $CALC_{cj}$ arrangée pour mettre en oeuvre l'étape 100 d'attribution d'un certificat $A_i$ à l'entité utilisatrice U telle que décrite ci-avant. Une telle unité de calcul $CALC_{cj}$ peut consister en un processeur, un micro-processeur, ou bien un ordinateur personnel ou un serveur comprenant un tel processeur.

Cette entité certificatrice $C_i$ comprend en outre une unité de communication $COM_{cj}$ adaptée pour transmettre le certificat provisoire $A_i$ généré par l'unité de calcul $CALC_{cj}$ à l'entité utilisatrice U auquel il est attribué. Cette unité de communication $COM_{cj}$ peut être implémentée avec des dispositifs de transmission de type radiofréquence, sans-fil ou optique, ou filaires, capables de transmettre des données numériques correspondant à un certificat provisoire $A_i$ vers l'entité utilisatrice U, aussi bien que de recevoir de celle-ci des données numériques correspondant à un engagement C et une preuve de connaissance $PoK_c$ de cet engagement C.

Cette entité certificatrice $C_j$ peut comprendre en outre une unité de mémorisation $MEM_{cj}$, connectée à l'unité de calcul $CALC_{cj}$ et capable de mémoriser les attributs $m_1,...,m_1$ associés à l'utilisateur de l'entité utilisatrice U afin de pouvoir les fournir ultérieurement à l'unité de calcul $CALC_{cj}$ lorsque celle-ci est amenée à générer un certificat $A_i$. Cette unité de mémorisation $MEM_{ci}$ comprend en outre une partie sécurisée capable de stocker la clé secrète $sk_{Cj}$ attribuée à l'entité certificatrice $C_j$.

L'entité vérificatrice V, quant à elle, peut être un dispositif informatique de type serveur appartenant à un organisme tiers apte à délivrer un service, tel que des transports publics, un organisme vendant des billets de concert ou de musée, délivrant des tickets restaurant pour des étudiants, ou donnant accès à des équipements de type bibliothèque ou piscine, entre autres.

Cette entité vérificatrice V comprend une unité de communication $COM_V$ capable de recevoir une preuve de connaissance $PoK_{\sigma}$ d'une pluralité de certificats $\sigma_1,...,\sigma_i...,\sigma_N$ attribués à l'entité utilisatrice. Cette unité de communication $COM_V$ peut être implémentée similairement à l'unité de communication $COM_{ci}$ décrite ci-avant.

Cette entité vérificatrice V comprend en outre une unité de calcul $CALC_V$ capable d'appliquer l'étape de vérification 400 décrite ci-avant à une preuve de connaissance $PoK_{\sigma}$ reçue de l'entité utilisatrice U et à déclencher la fourniture d'un service SERV à cette entité utilisatrice U en fonction du résultat de cette vérification. Cette unité de calcul $CALC_V$ peut être implémentée similairement à l'unité de communication $CALC_{cj}$ décrite ci-avant.

Dans un mode de réalisation, l'entité vérificatrice V correspond à l'entité fournissant un service, auquel cas l'entité vérificatrice V comprend une unité de fourniture de service, qui peut être l'unité de calcul $CALC_V$ elle-même lorsqu'il s'agit de calculer une réduction en fonction de l'âge d'un utilisateur, par exemple. Dans un autre mode de réalisation, l'entité vérificatrice V n'est pas elle-même l'entité fournissant un service, mais prend le rôle d'intermédiaire vérificateur. Dans ce cas, l'unité de communication $COM_V$ est apte, en outre, à communiquer avec l'entité fournissant le service requis par l'entité utilisatrice U, afin de déclencher la fourniture du service après que l'unité de calcul $CALC_V$ ait vérifié la preuve de connaissance $PoK_{\sigma}$ reçue de l'entité utilisatrice U.

L'entité utilisatrice U, pour sa part, peut prendre la forme d'un dispositif informatique de type ordinateur personnel ou d'un smartphone, voire d'une carte à puce ou d'une étiquette RFID, et comprend une unité de communication $COM_u$, similaire aux unités $COM_V$ et $COM_c$ décrite précédemment, capable de recevoir au moins un certificat $A_i$ calculé par une entité certificatrice $C_i$ et de transmettre une preuve de connaissance $PoK_{\sigma}$ construite à partir des certificats $A_i$ reçus de différentes entité certificatrices à l'entité vérificatrice V afin de requérir un service SERV.

L'entité utilisatrice U comprend en outre une unité de calcul $CALC_u$ capable de mettre en oeuvre l'étape 300 de calcul de la preuve de connaissance $PoK_\sigma$ d'une pluralité de certificats $\sigma_1,...,\sigma_i,...,\sigma_N$ attribués à l'entité utilisatrice, telle que décrite ci-avant. Une telle unité de calcul $CALC_u$ peut être implémentée similairement aux unités de calcul $CALC_{cj}$ et $CALC_v$ décrites ci-avant.

Cette entité utilisatrice U peut comprendre en outre une unité de mémorisation $MEM_u$, connectée à l'unité de calcul $CALC_u$ et capable de mémoriser les différents certificats $A_1,...,A_i,...,A_N$ reçus des entités certificatrices, les certificats $\sigma_1,...,\sigma_i,...,\sigma_N$ avantageusement obtenus respectivement par démasquage de ces certificats $A_1,...,A_i,...,A_N$ lorsque ces derniers sont des certificats provisoires, ainsi que le certificat agrégé $\sigma_a$ obtenu à partir de ces certificats. Cette unité de mémorisation $MEM_u$ comprend en outre une partie sécurisée capable de stocker la clé secrète $sk_u$ attribuée à l'entité utilisatrice U.

La présente invention vise en outre un programme d'ordinateur comprenant des instructions pour la mise en oeuvre de l'étape de génération d'un certificat $A_i$ au moyen d'au moins un attribut $m_k$ ci-avant, lorsque ce programme d'ordinateur est exécuté par l'unité de calcul $CALC_{cj}$ située dans l'entité certificatrice $C_j$ décrite ci-avant.

La présente invention vise aussi un programme d'ordinateur comprenant des instructions pour la mise en oeuvre de l'étape 300 de génération d'une preuve de connaissance $PoK_\sigma$ d'une pluralité de certificats attribués à une entité utilisatrice U lorsque ce programme d'ordinateur est exécuté par l'unité de calcul $CALC_u$ située dans l'entité utilisatrice U décrite ci-avant.

La présente invention vise en outre un programme d'ordinateur comprenant des instructions pour la mise en oeuvre de l'étape 400 de vérification, au moyen d'une telle preuve de connaissance $PoK_\sigma$ d'au moins un certificat attribué à une entité utilisatrice U lorsque ce programme d'ordinateur est exécuté par l'unité de calcul $CALC_v$ située dans l'entité vérificatrice V décrite ci-avant.

Ces programmes peuvent utiliser n'importe quel langage de programmation, et être sous la forme d'un code source, code objet, ou de code intermédiaire entre code source et code objet, tel que dans une forme provisoirement compilée, ou dans n'importe quelle autre forme souhaitable.

L'invention vise aussi un support d'informations lisible par un ordinateur ou processeur de données, et comportant les instructions d'un des programmes mentionnés ci-dessus. Un tel support d'informations peut être n'importe quelle entité ou dispositif capable de stocker le programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette ou un disque dur.

Ce support d'informations peut aussi être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

La présente invention peut trouver application dans tous les domaines dans lesquels des services sont fournis à des utilisateurs en fonction de la fourniture d'informations personnelles concernant ces utilisateurs.

La présente invention est notamment particulièrement avantageuse lorsqu'un organisme tiers ne fournit un service que sur la base du croisement d'informations personnelles d'un utilisateur certifiées par une ou (avantageusement) plusieurs organisations certificatrices distinctes, ce qui amène habituellement l'utilisateur à révéler des informations personnelles, non nécessaires en elles-mêmes à l'obtention de ce service mais fournies conjointement avec les informations nécessaires à l'obtention de ce service dans les certificats, à cet organisme tiers.

A titre d'exemple, un premier certificat peut être délivré par une mairie sur la base d'un attribut d'un utilisateur prouvant qu'il habite une ville bien précise, parmi d'autres attributs personnels. Un deuxième certificat peut être délivré par une université sur la base d'un attribut de cet utilisateur prouvant qu'il est bien étudiant dans cette université, parmi d'autres attributs personnels comme son âge.

Avec la présente invention, l'utilisateur peut alors agréger ces deux certificats afin de requérir une réduction auprès d'un service de transport public qui n'accorde de telles réductions qu'aux habitants de cette ville précise qui sont étudiants. En utilisant le procédé d'accès anonyme de la présente invention, l'utilisateur peut alors obtenir cette réduction spécifique aux seuls étudiants de cette ville, sans avoir besoin de dévoiler d'autres informations personnelles.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

La présente invention peut ainsi s'appliquer au cas où un seul attribut $m_l$ est certifié, ce qui correspond au cas où une entité certificatrice émet des certificats sur ce seul attribut $m_l$. Un schéma simple et efficace est ainsi obtenu. Dans ce cas, l'entité certificatrice signe l'attribut $m_l$, qui peut se présenter sous la forme d'un document, lequel peut être en l'occurrence n'importe quelle suite de bits, courte ou longue.

La présente invention peut également s'appliquer au cas où plusieurs attributs $m_1,..., m_{l_j}$, sont certifiés, avec $l_j>1$. Dans ce cas, un document $m$ à signer peut être séparé en plusieurs sous-documents $m_{l_1},..., m_{l_j}$, ce qui permet de laisser la liberté à l'utilisateur de cacher certains sous-documents lorsqu'il montre ses accréditations, tout en lui interdisant de cacher d'autres sous-documents.

Par ailleurs, un mode de réalisation particulier de preuve de connaissance a été décrit dans le mode de réalisation illustré à la figure 3 en ce qui concerne la preuve de connaissance $\text{PoK}_\sigma$ du certificat agrégé $\sigma_a$ envoyée à l'entité vérificatrice V lors de la phase d'authentification correspondant aux étapes 300 et 400.

Il est cependant évident que la présente invention ne se limite à ce seul mode de réalisation et que la preuve de connaissance $\text{PoK}_\sigma$ du certificat agrégé $\sigma_a$ envoyée à l'entité vérificatrice V peut consister en une autre forme de donnée publique construite à partir de ce certificat agrégé et permettant de prouver que l'entité utilisatrice U a la connaissance de ce certificat agrégé $\sigma_a$ et que les certificats composant ce certificat agrégé ont bien été attribués à l'entité utilisatrice U par une ou plusieurs entité(s) certificatrice(s), sans pour autant dévoiler ces certificats eux-mêmes, ni le certificat agrégé, à l'entité vérificatrice V.

## Revendications

1. Procédé d'accès anonyme à un service, comprenant :

l'attribution (100), par au moins une entité certificatrice ($C_j$), d'une pluralité de certificats ($\sigma_l,\sigma_{N'}$) à une entité utilisatrice (U), lesdits certificats étant calculés à partir d'au moins un attribut ($m_k$) associé à l'entité utilisatrice, le calcul (200), par l'entité utilisatrice (U), d'un certificat agrégé ($\sigma_a$) à partir d'une pluralité de certificats ($\sigma_1,\sigma_N$) parmi les certificats attribués à l'entité utilisatrice (U) ;
le calcul (300), par l'entité utilisatrice (U), d'une preuve de connaissance ($\text{PoK}_\sigma$) du certificat agrégé ($\sigma_a$) ; et
une vérification (400), effectuée par une entité vérificatrice (V), d'au moins un desdits certificats au moyen de ladite preuve de connaissance ($\text{PoK}_\sigma$), l'accès au service étant fourni par l'entité vérificatrice à l'entité utilisatrice en fonction du résultat de ladite vérification ;

et **caractérisé en ce que**
l'attribution de la pluralité de certificats comprend, pour chacun des certificats attribués par l'entité certificatrice ($C_j$) :

- le calcul (150), par l'entité certificatrice ($C_j$), d'un certificat ($\sigma_i$) au moyen d'une donnée publique (C) liée à une clé secrète ($sk_U$) de l'entité utilisatrice, d'au moins un attribut ($m_k$) associé à l'entité utilisatrice et d'une clé secrète ($sk_{Cj}$) de l'entité certificatrice; et
- la transmission (155), par l'entité certificatrice ($C_j$), du certificat ($\sigma_i$) à l'entité utilisatrice (U).

2. Procédé d'accès anonyme à un service selon la revendication 1, **caractérisé en ce que** le certificat ($\sigma_i$) est calculé dans le cadre des environnements bilinéaires munis de couplages selon la formule suivante :

$$\sigma_i = \left( C \cdot \prod_{k=1}^{l_j} H(g_1^{sk_{Cj}} \big\| g_2^{sk_{Cj}} \big\| m_k) \right)^{sk_{Cj}}$$

où ($\sigma_i$ représente le certificat, C représente la donnée publique C liée à la clé secrète de l'entité utilisatrice, lj représente le nombre d'attributs signés par l'entité certificatrice $C_j$, H représente une fonction cryptographique de hachage, $g_1$ et $g_2$ représentent deux générateurs de groupe choisis aléatoirement et de manière uniforme respectivement dans deux groupes d'ordre p, où p est un nombre entier premier, $sk_{Cj}$ représente la clé secrète de l'entité certificatrice, et $m_k$ représente un attribut associé à l'entité utilisatrice.

3. Procédé d'accès anonyme à un service selon l'une des revendications 1 ou 2, dans lequel le certificat ($\sigma_i$) calculé par l'entité certificatrice ($C_j$) est un certificat provisoire, l'étape d'attribution (100') étant **caractérisée en ce que** :

la donnée publique liée à la clé secrète ($sk_U$) de l'entité utilisatrice est un engagement (C') sur la clé secrète ($sk_U$) de l'entité utilisatrice calculé (110") dans l'entité utilisatrice (U) au moyen d'une variable aléatoire (s) avant d'être transmis (123') à l'entité certificatrice ($C_j$);
le certificat provisoire reçu par l'entité utilisatrice (U) est démasqué (160') au moyen de ladite variable aléatoire (s) afin d'obtenir le certificat ($\sigma_i$) attribué à l'entité utilisatrice (U).

4. Procédé d'accès anonyme à un service selon la revendication 3, **caractérisé en ce que** le démasquage (160) du certificat provisoire ($A_i$) comprend le calcul du certificat ($\sigma_i$) attribué à l'entité utilisatrice (U) en multipliant le certificat reçu de l'entité certificatrice par la variable ($g_1{}^{skCj})^{-s}$, où $g_1$ représente un générateur de groupe choisi aléatoirement et de manière uniforme dans un groupe d'ordre p, où p est un nombre entier premier, $sk_{Cj}$ représente la clé secrète de l'entité certificatrice et s est une valeur aléatoirement choisie dans l'ensemble $Z_p$ des entiers modulo p.

5. Procédé d'accès anonyme à un service selon la revendication 3 ou 4, **caractérisé en ce que** le certificat ($\sigma_i$) attribué à l'entité utilisatrice (U) est vérifié (170) par l'entité utilisatrice après le démasquage (160) du certificat provisoire.

6. Procédé d'accès anonyme à un service selon l'une des revendications 1 à 5, l'étape d'attribution (100) étant **caractérisée en ce que** :

   la donnée publique (C) liée à la clé secrète ($sk_U$) de l'entité utilisatrice est vérifiée (140) au moyen d'une preuve de connaissance (R,S) de ladite donnée publique (C) ; et
   le calcul (150) du certificat ($A_i$) n'est effectué que si le résultat de la vérification (140) de l'engagement est positif.

7. Procédé d'accès anonyme à un service selon l'une des revendications 1 à 6, l'étape d'attribution (100) étant **caractérisée par** :

   le calcul (110,110"), par l'entité utilisatrice, de la donnée publique (C) liée à la clé secrète ($sk_U$) de l'entité utilisatrice ;
   le calcul (120) d'une première partie (R) de la preuve de connaissance à partir de la donnée publique (C) liée à la clé secrète ($sk_U$); et
   le calcul (130) d'une deuxième partie (S) de la preuve de connaissance à partir d'une donnée aléatoire (c) reçue de l'entité certificatrice.

8. Procédé d'accès anonyme à un service selon la revendication 7, **caractérisé en ce que** le calcul (110") de la donnée publique (C") comprend :

   le calcul d'une première partie ($C_0$") de ladite donnée publique liée à la clé secrète ($sk_U$) de l'entité utilisatrice ; et
   le calcul d'une deuxième partie ($C_2$") de la donnée publique liée à la clé secrète ($sk_U$) de l'entité utilisatrice et à au moins un certificat attribué par une autre entité certificatrice.

9. Procédé d'accès anonyme à un service selon l'une des revendications 1 à 8, **caractérisé en ce que** le calcul (300) de la preuve de connaissance ($PoK_\sigma$) du certificat agrégé ($\sigma_a$) comprend :

   le calcul (310) d'un engagement (D) sur le certificat agrégé ($\sigma_a$) ;
   le calcul (320) d'une première partie (P) de la preuve de connaissance ($PoK_\sigma$) à partir de l'engagement (D) sur le certificat agrégé ($\sigma_a$) ;
   le calcul (340) d'une deuxième partie (T) de la preuve de connaissance ($PoK_\sigma$) à partir d'une donnée aléatoire (d) reçue de l'entité vérificatrice (V).

10. Entité certificatrice ($C_j$) apte à accréditer une entité utilisatrice (U), **caractérisée en ce qu'**elle comprend :

    une unité de calcul ($CALC_{Cj}$) apte à mettre en oeuvre l'étape de calcul d'un certificat ($\sigma_i$) à partir d'au moins un attribut ($m_k$) du procédé d'accès anonyme selon l'une des revendications 1 à 9; et
    une unité de communication ($COM_{Cj}$) apte à transmettre ledit certificat ($\sigma_i$) à l'entité utilisatrice (U).

11. Système d'accréditation anonyme (SAA) pour l'accès anonyme à un service, **caractérisé en ce que** le système comprend :

    au moins une entité certificatrice ($C_j$) selon la revendication 10 ;
    une entité vérificatrice (V) ; et
    une entité utilisatrice (U) ladite entité vérificatrice (V), apte à vérifier une entité utilisatrice (U), comprenant :
    une unité de communication ($COM_V$) apte à recevoir une preuve de connaissance ($PoK_\sigma$) d'une pluralité de certificats attribués à l'entité utilisatrice ; et
    une unité de calcul (CALCv) apte à mettre en oeuvre l'étape de vérification (400) du procédé d'accès anonyme selon l'une des revendications 1 à 9 au moyen de ladite preuve de connaissance, afin de démarrer la fourniture d'un service à l'entité utilisatrice en fonction du résultat de la vérification;

ladite entité utilisatrice (U), apte à requérir un service par l'intermédiaire d'une entité vérificatrice (V) au moyen d'une preuve de connaissance (PoK$_\sigma$) d'une pluralité de certificats attribués à l'entité utilisatrice par au moins une entité certificatrice (C$_j$), comprenant :

une unité de communication (COM$_U$) apte à recevoir une pluralité de certificats ($\sigma_i$) provenant d'au moins une entité certificatrice (C$_j$) ; et

une unité de calcul (CALC$_U$) apte à mettre en oeuvre l'étape (300) de calcul d'une preuve de connaissance (PoK$_\sigma$) du procédé d'accès anonyme selon l'une des revendications 1 à 9 à partir de la pluralité de certificats ($\sigma_j$) reçus,

l'unité de communication (COM$_U$) étant apte, en outre, à transmettre la preuve de connaissance (PoK$_\sigma$) à l'entité vérificatrice (V) afin de requérir un service.

**Patentansprüche**

1. Anonymes Zugriffsverfahren auf einen Dienst, das enthält:

die Zuteilung (100), durch mindestens eine zertifizierende Entität (C$_j$), einer Vielzahl von Zertifikaten ($\sigma_1$, $\sigma_N$.) an eine Benutzerentität (U),

wobei die Zertifikate ausgehend von mindestens einem der Benutzerentität zugeordneten Attribut (m$_k$) berechnet werden,

die Berechnung (200), durch die Benutzerentität (U), eines aggregierten Zertifikats ($\sigma_a$) ausgehend von einer Vielzahl von Zertifikaten ($\sigma_1$, $\sigma_N$) unter den der Benutzerentität (U) zugeteilten Zertifikaten;

die Berechnung (300), durch die Benutzerentität (U), eines Kenntnisnachweises (PoK$_\sigma$) des aggregierten Zertifikats ($\sigma_a$) ; und

eine Prüfung (400), ausgeführt durch eine Prüfentität (V), mindestens eines der Zertifikate mittels des Kenntnisnachweises (PoK$_\sigma$), wobei der Zugriff auf den Dienst von der Prüfentität an die Benutzerentität abhängig vom Ergebnis der Prüfung geliefert wird;

und **dadurch gekennzeichnet, dass**

die Zuteilung der Vielzahl von Zertifikaten für jedes der durch die zertifizierende Entität (C$_j$) zugeteilten Zertifikate enthält:

- die Berechnung (150), durch die zertifizierende Entität (C$_j$), eines Zertifikats ($\sigma_i$) mittels eines öffentlichen Datenwerts (C) verbunden mit einem Geheimschlüssel (sk$_U$) der Benutzerentität, mindestens eines der Benutzerentität zugeordneten Attributs (m$_k$) und eines Geheimschlüssels (sk$_{Cj}$) der zertifizierenden Entität; und

- die Übertragung (155), durch die zertifizierende Entität (C$_j$), des Zertifikats ($\sigma_i$) an die Benutzerentität (U).

2. Anonymes Zugriffsverfahren auf einen Dienst nach Anspruch 1, **dadurch gekennzeichnet, dass** das Zertifikat ($\sigma_i$) im Rahmen der mit Kopplungen versehenen bilinearen Umgebungen gemäß der folgenden Formel berechnet wird:

$$\sigma_i = \left( C \cdot \prod_{k=1}^{l_j} H(g_1^{sk_{Cj}} \left\| g_2^{sk_{Cj}} \right\| m_k) \right)^{sk_{Cj}}$$

wobei $\sigma_i$ das Zertifikat darstellt, C den mit dem Geheimschlüssel der Benutzerentität verbundenen öffentlichen Datenwert C darstellt, lj die Anzahl von von der zertifizierenden Entität C$_j$ signierten Attributen darstellt, H eine kryptographische Hashfunktion darstellt, g$_1$ und g$_2$ zwei Gruppengeneratoren darstellen, die zufällig und gleichmäßig je in zwei Gruppen der Ordnung p gewählt werden, wobei p eine Primzahl ist, sk$_{Cj}$ den Geheimschlüssel der zertifizierenden Entität darstellt, und m$_k$ ein der Benutzerentität zugeordnetes Attribut darstellt.

3. Anonymes Zugriffsverfahren auf einen Dienst nach einem der Ansprüche 1 oder 2, wobei das von der zertifizierenden Entität (C$_j$) berechnete Zertifikat ($\sigma_i$) ein provisorisches Zertifikat ist, wobei der Zuteilungsschritt (100') **dadurch gekennzeichnet ist, dass**:

der mit dem Geheimschlüssel ($sk_U$) der Benutzerentität verbundene öffentliche Datenwert eine Verpflichtung (C') auf dem Geheimschlüssel ($sk_U$) der Benutzerentität ist, die in der Benutzerentität (U) mittels einer Zufallsvariablen (s) berechnet wird (110''), ehe sie an die zertifizierende Entität ($C_j$) übertragen wird (123') ;

das von der Benutzerentität (U) empfangene provisorische Zertifikat mittels der Zufallsvariablen (s) demaskiert wird (160'), um das der Benutzerentität (U) zugeteilte Zertifikat ($\sigma_i$) zu erhalten.

4. Anonymes Zugriffsverfahren auf einen Dienst nach Anspruch 3, **dadurch gekennzeichnet, dass** die Demaskierung (160) des provisorischen Zertifikats ($A_i$) die Berechnung des der Benutzerentität (U) zugeteilten Zertifikats ($\sigma_i$) durch Multiplizieren des von der zertifizierenden Entität empfangenen Zertifikats mit der Variablen ($g_1^{sk_{Cj}}$)$^{-s}$ enthält, wobei $g_1$ einen zufällig und gleichmäßig in einer Gruppe der Ordnung p gewählten Gruppengenerator darstellt, wobei p eine Primzahl ist, $sk_{Cj}$ den Geheimschlüssel der zertifizierenden Entität darstellt und s ein zufällig in der Einheit $Z_p$ der ganzen Zahlen Modulo p gewählter Wert ist.

5. Anonymes Zugriffsverfahren auf einen Dienst nach Anspruch 3 oder 4, **dadurch gekennzeichnet, dass** das der Benutzerentität (U) zugeteilte Zertifikat ($\sigma_i$) von der Benutzerentität nach der Demaskierung (160) des provisorischen Zertifikats geprüft wird (170) .

6. Anonymes Zugriffsverfahren auf einen Dienst nach einem der Ansprüche 1 bis 5, wobei der Zuteilungsschritt (100) **dadurch gekennzeichnet ist, dass**:

der mit dem Geheimschlüssel ($sk_U$) der Benutzerentität verbundene öffentliche Datenwert (C) mittels eines Kenntnisnachweises (R,S) des öffentlichen Datenwerts (C) geprüft wird (140); und
die Berechnung (150) des Zertifikats ($A_i$) nur ausgeführt wird, wenn das Ergebnis der Prüfung (140) der Verpflichtung positiv ist.

7. Anonymes Zugriffsverfahren auf einen Dienst nach einem der Ansprüche 1 bis 6, wobei der Zuteilungsschritt (100) **gekennzeichnet ist durch**:

die Berechnung (110, 110''), **durch** die Benutzerentität, des mit dem Geheimschlüssel ($sk_U$) der Benutzerentität verbundenen öffentlichen Datenwerts (C);
die Berechnung (120) eines ersten Teils (R) des Kenntnisnachweises ausgehend vom mit dem Geheimschlüssel ($sk_U$) verbundenen öffentlichen Datenwert (C); und
die Berechnung (130) eines zweiten Teils (S) des Kenntnisnachweises ausgehend von einem von der zertifizierenden Entität empfangenen Zufallsdatenwert (c).

8. Anonymes Zugriffsverfahren auf einen Dienst nach Anspruch 7, **dadurch gekennzeichnet, dass** die Berechnung (110'') des öffentlichen Datenwerts (C'') enthält:

die Berechnung eines ersten Teils ($C_0$'') des mit dem Geheimschlüssel ($sk_U$) der Benutzerentität verbundenen öffentlichen Datenwerts; und
die Berechnung eines zweiten Teils ($C_2$'') des mit dem Geheimschlüssel ($sk_U$) der Benutzerentität und mit mindestens einem von einer anderen zertifizierenden Entität zugeteilten Zertifikat verbundenen öffentlichen Datenwerts.

9. Anonymes Zugriffsverfahren auf einen Dienst nach einem der Ansprüche 1 bis 8, **dadurch gekennzeichnet, dass** die Berechnung (300) des Kenntnisnachweises ($PoK_\sigma$) des aggregierten Zertifikats ($\sigma_a$) enthält:

die Berechnung (310) einer Verpflichtung (D) auf dem aggregierten Zertifikat ($\sigma_a$);
die Berechnung (320) eines ersten Teils (P) des Kenntnisnachweises ($PoK_\sigma$) ausgehend von der Verpflichtung (D) auf dem aggregierten Zertifikat ($\sigma_a$) ;
die Berechnung (340) eines zweiten Teils (T) des Kenntnisnachweises ($PoK_\sigma$) ausgehend von einem von der Prüfentität (V) empfangenen Zufallswert (d).

10. Zertifizierende Entität ($C_j$), die eine Benutzerentität (U) akkreditieren kann, **dadurch gekennzeichnet, dass** sie enthält:

eine Recheneinheit ($CALC_{Cj}$), die den Schritt der Berechnung eines Zertifikats ($\sigma_i$) ausgehend von mindestens einem Attribut ($m_k$) des anonymen Zugriffsverfahrens nach einem der Ansprüche 1 bis 9 durchführen kann; und

eine Kommunikationseinheit (COM$_{Cj}$), die das Zertifikat ($\sigma_i$) an die Benutzerentität (U) übertragen kann.

11. Anonymes Akkreditierungssystem (SAA) für den anonymen Zugriff auf einen Dienst, **dadurch gekennzeichnet, dass** das System enthält:

mindestens eine zertifizierende Entität (C$_j$) nach Anspruch 10;
eine Prüfentität (V); und
eine Benutzerentität (U);
wobei die Prüfentität (V), die eine Benutzerentität (U) prüfen kann, enthält:

eine Kommunikationseinheit (COM$_V$), die einen Kenntnisnachweis (PoK$_\sigma$) einer Vielzahl von der Benutzerentität zugeteilten Zertifikaten empfangen kann; und
eine Recheneinheit (CALC$_V$), die den Prüfschritt (400) des anonymen Zugriffsverfahrens nach einem der Ansprüche 1 bis 9 mittels des Kenntnisnachweises durchführen kann, um die Lieferung eines Dienstes an die Benutzerentität abhängig vom Ergebnis der Prüfung zu starten;

wobei die Benutzerentität (U), die einen Dienst mit Hilfe einer Prüfentität (V) mittels eines Kenntnisnachweises (PoK$_\sigma$) einer Vielzahl von der Benutzerentität durch mindestens eine zertifizierende Entität (C$_j$) zugeteilten Zertifikaten anfordern kann, enthält:

eine Kommunikationseinheit (COM$_U$), die eine Vielzahl von Zertifikaten ($\sigma_i$) empfangen kann, die von mindestens einer zertifizierenden Entität (C$_j$) kommen; und
eine Recheneinheit (CALC$_U$), die den Schritt (300) der Berechnung eines Kenntnisnachweises (PoK$_\sigma$) des anonymen Zugriffsverfahrens nach einem der Ansprüche 1 bis 9 ausgehend von der Vielzahl von empfangenen Zertifikaten ($\sigma_i$) durchführen kann,
wobei die Kommunikationseinheit (COM$_U$) außerdem den Kenntnisnachweis (PoK$_\sigma$) an die Prüfentität CV) übertragen kann, um einen Dienst anzufordern.

## Claims

1. Method of anonymous access to a service, comprising:

the allocating (100), by at least one certifying entity (C$_j$), of a plurality of certificates ($\sigma_1$, $\sigma_{N'}$) to a user entity (U), said certificates being calculated on the basis of at least one attribute (m$_k$) associated with the user entity, the calculation (200), by the user entity (U), of an aggregated certificate ($\sigma_a$) on the basis of a plurality of certificates ($\sigma_1$,$\sigma_N$) from among the certificates allocated to the user entity (U);
the calculation (300), by the user entity (U), of a proof of knowledge (PoK$_\sigma$) of the aggregated certificate ($\sigma_a$) ; and
a verification (400), performed by a verifying entity (V), of at least one of said certificates by means of said proof of knowledge (PoK$_\sigma$), access to the service being provided by the verifying entity to the user entity as a function of the result of said verification;
and **characterized in that**
the allocating of the plurality of certificates comprises, for each of the certificates allocated by the certifying entity (C$_j$);

- the calculation (150), by the certifying entity (C$_j$), of a certificate ($\sigma_i$) by means of a public datum (C) related to a secret key (sk$_u$) of the user entity, of at least one attribute (m$_k$) associated with the user entity and of a secret key (sk$_{Cj}$) of the certifying entity; and
- the transmission (155), by the certifying entity (C$_j$), of the certificate ($\sigma_i$) to the user entity (U) .

2. Method of anonymous access to a service according to Claim 1, **characterized in that** the certificate ($\sigma_i$) is calculated within the framework of the bilinear environments furnished with couplings according to the following formula:

$$\sigma_i = \left( C \cdot \prod_{k=1}^{i_j} H(g_1^{sk_{Cj}} \| g_2^{sk_{Cj}} \| m_k) \right)^{sk_{Cj}}$$

where $\sigma_i$ represents the certificate, C represents the public datum C related to the secret key of the user entity, $l_j$ represents the number of attributes signed by the certifying entity $C_j$, H represents a cryptographic hash function, $g_1$ and $g_2$ represent two group generators chosen randomly and uniformly respectively in two groups of order p, where p is a prime integer, $sk_{Cj}$ represents the secret key of the certifying entity, and $m_k$ represents an attribute associated with the user entity.

3. Method of anonymous access to a service according to one of Claims 1 or 2, in which the certificate ($\sigma_i$) calculated by the certifying entity ($C_j$) is a provisional certificate, the allocating step (100') being **characterized in that**:

the public datum related to the secret key ($sk_U$) of the user entity is a commitment (C') on the secret key ($sk_U$) of the user entity calculated (110") in the user entity (U) by means of a random variable (s) before being transmitted (123') to the certifying entity ($C_j$);
the provisional certificate received by the user entity (U) is unmasked (160') by means of said random variable (s) so as to obtain the certificate ($\sigma_i$) allocated to the user entity (U).

4. Method of anonymous access to a service according to Claim 3, **characterized in that** the unmasking (160) of the provisional certificate ($A_i$) comprises the calculation of the certificate ($\sigma_i$) allocated to the user entity (U) by multiplying the certificate received from the certifying entity by the variable ($g_1^{sk_{Cj}})^{-s}$, where $g_1$ represents a group generator chosen randomly and uniformly in a group of order p, where p is a prime integer, $sk_{Cj}$ represents the secret key of the certifying entity and s is a value randomly chosen in the set $Z_p$ of integers modulo p.

5. Method of anonymous access to a service according to Claim 3 or 4, **characterized in that** the certificate ($\sigma_i$) allocated to the user entity (U) is verified (170) by the user entity after the unmasking (160) of the provisional certificate.

6. Method of anonymous access to a service according to one of Claims 1 to 5, the allocating step (100) being **characterized in that**:

the public datum (C) related to the secret key ($sk_U$) of the user entity is verified (140) by means of a proof of knowledge (R,S) of said public datum (C); and
the calculation (150) of the certificate ($A_i$) is performed only if the result of the verification (140) of the commitment is positive.

7. Method of anonymous access to a service according to one of Claims 1 to 6, the allocating step (100) being **characterized by**:

the calculation (110, 110"), by the user entity, of the public datum (C) related to the secret key ($sk_U$) of the user entity;
the calculation (120) of a first part (R) of the proof of knowledge on the basis of the public datum (C) related to the secret key ($sk_U$); and
the calculation (130) of a second part (S) of the proof of knowledge on the basis of a random datum (c) received from the certifying entity.

8. Method of anonymous access to a service according to Claim 7, **characterized in that** the calculation (110") of the public datum (C") comprises:

the calculation of a first part ($C_0$") of said public datum related to the secret key ($sk_U$) of the user entity; and
the calculation of a second part ($C_2$") of the public datum related to the secret key ($sk_U$) of the user entity and to at least one certificate allocated by another certifying entity.

9. Method of anonymous access to a service according to one of Claims 1 to 8, **characterized in that** the calculation (300) of the proof of knowledge ($PoK_\sigma$) of the aggregated certificate ($\sigma_a$) comprises:

the calculation (310) of a commitment (D) on the aggregated certificate ($\sigma_a$);
the calculation (320) of a first part (P) of the proof of knowledge ($PoK_\sigma$) on the basis of the commitment (D) on the aggregated certificate ($\sigma_a$);
the calculation (340) of a second part (T) of the proof of knowledge ($PoK_\sigma$) on the basis of a random datum (d) received from the verifying entity (V).

**10.** Certifying entity ($C_j$) able to accredit a user entity (U), **characterized in that** it comprises:

a calculation unit ($CALC_{Cj}$) able to implement the step of calculating a certificate ($\sigma_i$) on the basis of at least one attribute ($m_k$) of the method of anonymous access according to one of Claims 1 to 9; and

a communication unit ($COM_{cj}$) able to transmit said certificate ($\sigma_i$) to the user entity (U).

**11.** System of anonymous accreditation (SAA) for anonymous access to a service, **characterized in that** the system comprises:

at least one certifying entity ($C_j$) according to Claim 10;

a verifying entity (V); and

a user entity (U);

said verifying entity (V), able to verify a user entity (U), comprising:

a communication unit ($COM_v$) able to receive a proof of knowledge ($PoK_\sigma$) of a plurality of certificates allocated to the user entity; and

a calculation unit ($CALC_v$) able to implement the verifying step (400) of the method of anonymous access according to one of Claims 1 to 9 by means of said proof of knowledge, so as to commence the provision of a service to the user entity as a function of the result of the verification;

said user entity (U), able to request a service by way of a verifying entity (V) by means of a proof of knowledge ($PoK_\sigma$) of a plurality of certificates allocated to the user entity by at least one certifying entity ($C_j$), comprising:

a communication unit ($COM_U$) able to receive a plurality of certificates ($\sigma_i$) originating from at least one certifying entity ($C_j$); and

a calculation unit ($CALC_U$) able to implement the step (300) of calculating a proof of knowledge ($PoK_\sigma$) of the method of anonymous access according to one of Claims 1 to 9 on the basis of the plurality of certificates ($\sigma_i$) received,

the communication unit ($COM_U$) being able, furthermore, to transmit the proof of knowledge ($PoK_\sigma$) to the verifying entity (V) so as to request a service.

**FIG. 1**

FIG. 2

FIG. 3

$\sigma_1 x \dots x\sigma_i \dots x\sigma_N \longrightarrow \sigma_a$ — 200

$(\sigma_a, sk_u) \longrightarrow D = (D_1, D_2)$ — 310

$D \longrightarrow P$ — 320

$D, P = (P_1, P_2, P_3)$ — 325

$Z_p^* \xrightarrow{\$} d$ — 330

d — 335

$d \longrightarrow T$ — 340

$T = (T_x, T_r, T_s)$ — 345

$\underset{\text{VERIF}}{\text{VERIF (D, } \overbrace{P}^{PoK_\sigma}\text{, T)}}$ — 400

OK — 405

300

FIG. 4

$Z_p^* \xrightarrow{\$} s$
$u^{sk_u} g_1{}^s \longrightarrow C'$   —110'

$Z_p^* \xrightarrow{\$} r_x, r_s$
$u^{r_x} g_1{}^{r_s} \longrightarrow R'$   —120'

C', R'   123'

$Z_p^* \xrightarrow{\$} c'$   125'

c'   127'

$r_x + c'.sk_u \longrightarrow s_x$
$r_s + c'.s \longrightarrow s_s$   —130'

$S' = (s_x, s_s)$   135'

140'   $U^{s_x} g_1{}^{s_s} = R'.C'^{c'}$?

150'   $C' . \prod_{k=1}^{\ell_j} H(g_1{}^{skC_j} \| g_2{}^{skC_j} \| m_k) \xrightarrow{skC_j} \sigma_i$

$\sigma_i$   155'

$\sigma_i . \Gamma_{j,1}{}^{-s} \longrightarrow \sigma_i$   —160'

VERIF $\sigma_i$ ?   —170'

$\sigma_i$

100'

FIG. 5

U

$$Z_p^* \xrightarrow{\$} s,r$$
$$u^{sk_u}g_1{}^s \longrightarrow C_0"$$
$$g_1{}^r \longrightarrow C_1"$$
$$\sigma_i{}^{1/sk_u}.u^r \longrightarrow C_2"$$

110"

$$Z_p^* \xrightarrow{\$} r_x,r_s,r_r,r_\delta$$
$$\longrightarrow R_0,R_1,R_2,R_3$$

120"

123"

$$C"=(C_0",C_1",C_2"),R"=(R_0,R_1,R_2,R_3)$$

$C_j$

125"

$$Z_p^* \xrightarrow{\$} c"$$

c"

127"

$$r_x+c".sk_u \longrightarrow s_x$$
$$r_s+c"s \longrightarrow s_s$$
$$r_r+c"r \longrightarrow s_r$$
$$r_\delta+c".sk_u \longrightarrow s_\delta$$

130"

$$S"=(s_x,s_s,s_r,s_\delta)$$

135"

140" VERIF

150"
$$C_0". \prod_{k=1}^{\ell_j} H(g_1{}^{skCj}\| g_2{}^{skCj}\|m_k) \xrightarrow{skCj} \sigma_i$$

$$\sigma_i$$

$$\sigma_i.\Gamma_{j,1}{}^{-s} \longrightarrow \sigma_i$$

160"

VERIF $\sigma_i$ ?

170"

$$\sigma_i$$

100"

FIG. 6